(19) Europäisches Patentamt / European Patent Office / Office européen des brevets

(11) **EP 3 096 154 B1**

(12) **EUROPEAN PATENT SPECIFICATION**

(45) Date of publication and mention of the grant of the patent:
**28.03.2018 Bulletin 2018/13**

(51) Int Cl.:
**G01S 5/02** (2010.01)  **G01S 5/12** (2006.01)

(21) Application number: **15305765.8**

(22) Date of filing: **21.05.2015**

(54) **METHOD, SYSTEM AND COMPUTER-READABLE MEDIUM TO DETERMINE THE POSITION OF AN APPARATUS**

VERFAHREN, SYSTEM UND COMPUTERLESBARES MEDIUM ZUR BESTIMMUNG DER POSITION EINER VORRICHTUNG

PROCÉDÉ, SYSTÈME ET SUPPORT LISIBLE PAR ORDINATEUR POUR DÉTERMINER LA POSITION D'UN APPAREIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.11.2016 Bulletin 2016/47**

(73) Proprietor: **ALCATEL LUCENT**
**92100 Boulogne-Billancourt (FR)**

(72) Inventors:
• **Chen, Chung Shue**
**91620 Nozay (FR)**
• **Huynh, The Dang**
**91620 Nozay (FR)**

(74) Representative: **Berthier, Karine et al**
**Alcatel-Lucent International**
**Patent Business**
**Site Nokia Paris Saclay**
**Route de Villejust**
**91620 Nozay (FR)**

(56) References cited:
**WO-A2-2010/062108    US-A1- 2007 075 898**

## Description

FIELD OF INVENTION

The present subject matter relates to the determination of the position of an apparatus. More precisely the present subject matter is in the field of the positioning with only one reference. The reference also known as beacon can be mobile or stationary. The beacon is also called reference, reference point (RP) or reference device. The apparatus is also called user equipment or user device.

BACKGROUND

The aim of classic localization methods is to determine where a device, an object or an apparatus is. This determination can for example be done using GPS (Global Positioning System), RF fingerprint (radio map) or triangulation method (through 3 or more reference points). Such localization is challenging, requires strong infrastructure (for example. hardware, database), the system is finally expensive.

The proximity based methods trigger within the apparatus depending on what it is close to for example a Bluetooth access point (ID) or through scene analysis (e.g. CCTV image/video).

iBeacon is a popular proximity based solution, which is technically simple, easy-to-use, and offers interesting applications. Similar method can be applied to Android device too. However, the problem is the localization error. It is known that in today's Android/iPhone proximity based solution the error is about 3 meters with confidence 68%. In comparison using professional GPS device, the error is similar but at confidence 95%.

Document US2007/0075898 A1 discloses a system for measuring position of a tag, including a master unit measuring a first and a second distance to said tag.

SUMMARY

This summary is provided to introduce concepts related to the determination of the position of an apparatus.

In one implementation a method to determine a position of an apparatus is described. This Method comprises a first step 101 of determining a first distance $AB$ between the apparatus and a beacon, at a first instant and a first position A($x_A$, $y_A$) of the beacon, at the first instant and a second distance $DC$ or $AC$ between the apparatus and the beacon, at a second instant and a first length $BC$ of a first straight line going from a position of the apparatus at the first instant and a position of the apparatus at the second instant and a first angle $\alpha$ between a first axis and a first direction of the first straight line and a third distance $EF$ or $AF$ between the apparatus and the beacon at a third instant and a second length $BF$ of a second straight line going from a position of the apparatus at the first instant and a position of the apparatus at the third instant and a second angle $\beta$ between the first axis and a second direction of the second straight line and, eventually a second position D($x_D$, $y_D$) of the beacon at the second instant and, eventually a third position E($x_E$, $y_E$) of the beacon at the third instant. The method also comprises a second step 102 of determining at least two possible positions $B1$, $B2$ of the apparatus based on the first distance $AB$ and the second distance $DC$ or $AC$ and the first length $BC$ and the first angle $\alpha$ and the first position A($x_A$, $y_A$) and eventually the second position D($x_D$, $y_D$). The method also comprises a third step 103 of determining at least two other possible positions $B3$, $B4$ of the apparatus based on the first distance $AB$ and the third distance $EF$ or $AF$ and the second length $BF$ and the second angle $\beta$ and the first position A($x_A$, $y_A$) and eventually the third position E($x_E$, $y_E$). The method also comprises a fourth step 104 of determining the position of the apparatus by calculating distances between couples of different possible positions $B1$, $B2$, $B3$, $B4$ and by determining the position based on the couple with minimal distance.

In another implementation a system to determine a position of an apparatus is described. This system comprises a first module 501 configured to determine; a first distance $(AB)$ between the apparatus and a beacon, at a first instant and a first position (A(xA, yA)) of the beacon, at the first instant and a second distance ($DC$ or $AC$) between the apparatus and the beacon, at a second instant and a first length ($BC$) of a first straight line going from a position of the apparatus at the first instant and a position of the apparatus at the second instant and a first angle ($\alpha$) between a first axis and a first direction of the first straight line and a third distance ($EF$ or $AF$) between the apparatus and the beacon at a third instant and a second length ($BF$) of a second straight line going from a position of the apparatus at the first instant and a position of the apparatus at the third instant and a second angle ($\beta$) between the first axis and a second direction of the second straight line and, eventually a second position (D($x_D$, $y_D$)) of the beacon at the second instant and, eventually a third position (E($x_E$, $y_E$)) of the beacon at the third instant. The system also comprises a second module (502) configured to determine at least two possible positions ($B1$, $B2$) of the apparatus based on the first distance ($AB$) and the second distance ($DC$ or $AC$) and the first length ($BC$) and the first angle ($\alpha$) and the first position (A($x_A$, $y_A$)) and eventually the second position (D($x_D$, $y_D$)). The system also comprises a third module (503) configured to determine at least two other possible positions ($B3$, $B4$) of the apparatus based on; the first distance ($AB$) and the third distance ($EF$ or $AF$) and the second length (*BF*) and the second angle ($\beta$) and the first position (A($x_A$, $y_A$)) and eventually the third position (E($x_E$, $y_E$)). Finally the system comprises a fourth module (504) configured to calculate distances between couples of different possible positions (*B*1, *B*2, *B*3, *B*4) and to determine the position based on the couple with minimal distance.

In another implementation a computer-readable medium is described. This computer-readable medium has embodied thereon a method for determining the position of an apparatus. This method comprises a first step 101 of determining a first distance *AB* between the apparatus and a beacon, at a first instant and a first position A($x_A$, $y_A$) of the beacon, at the first instant and a second distance *DC* or *AC* between the apparatus and the beacon, at a second instant and a first length *BC* of a first straight line going from a position of the apparatus at the first instant and a position of the apparatus at the second instant and a first angle $\alpha$ between a first axis and a first direction of the first straight line and a third distance *EF* or *AF* between the apparatus and the beacon at a third instant and a second length *BF* of a second straight line going from a position of the apparatus at the first instant and a position of the apparatus at the third instant and a second angle $\beta$ between the first axis and a second direction of the second straight line and, eventually a second position D($x_D$, $y_D$) of the beacon at the second instant and, eventually a third position E($x_E$, $y_E$) of the beacon at the third instant. The method also comprises a second step 102 of determining at least two possible positions *B*1, *B*2 of the apparatus based on the first distance *AB* and the second distance *DC* or *AC* and the first length *BC* and the first angle $\alpha$ and the first position A($x_A$, $y_A$) and eventually the second position D($x_D$, $y_D$). The method also comprises a third step 103 of determining at least two other possible positions *B*3, *B*4 of the apparatus based on the first distance *AB* and the third distance *EF* or *AF* and the second length *BF* and the second angle $\beta$ and the first position A($x_A$, $y_A$) and eventually the third position E($x_E$, $y_E$). The method also comprises a fourth step 104 of determining the position of the apparatus by calculating distances between couples of different possible positions *B*1, *B*2, *B*3, *B*4 and by determining the position based on the couple with minimal distance.

BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 presents an embodiment of the method object of the present subject matter

Figures 2-a and 2-b presents the different elements, distances, angles used within the method object of the present subject matter

Figures 3-a and 3-c present another embodiment of the method object of the present subject matter

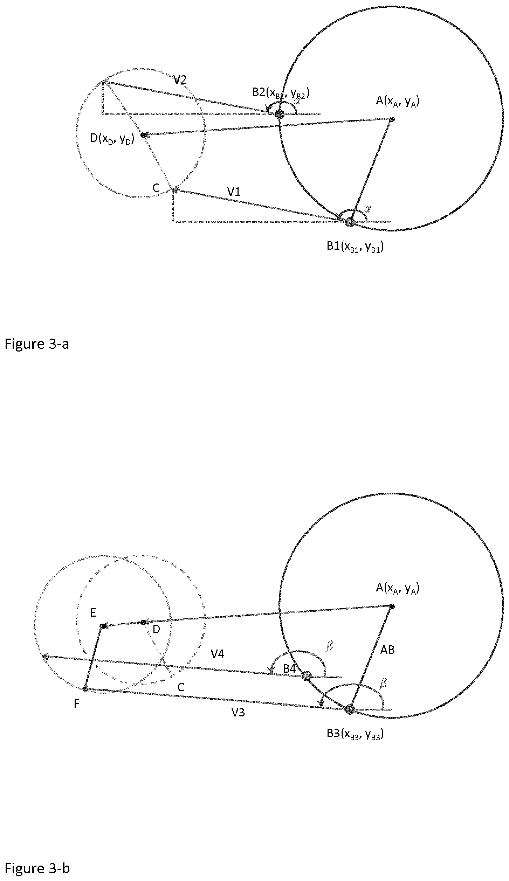

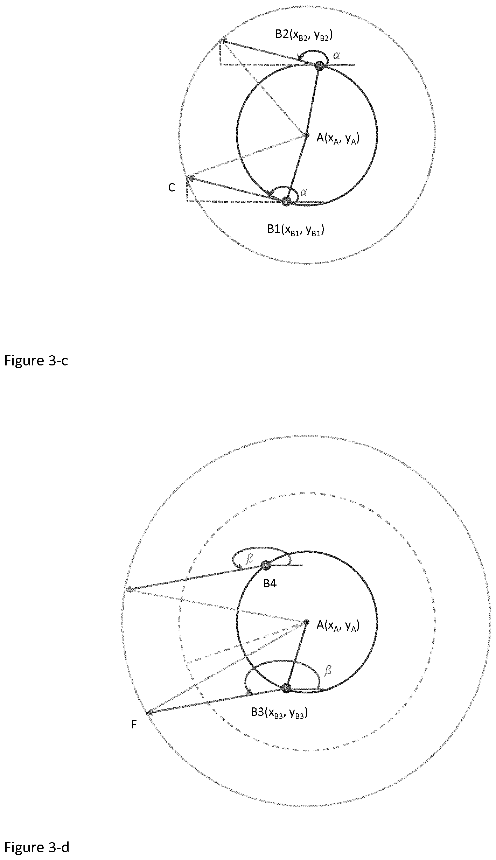

Figures 3-b and 3-d present another embodiment of the method object of the present subject matter

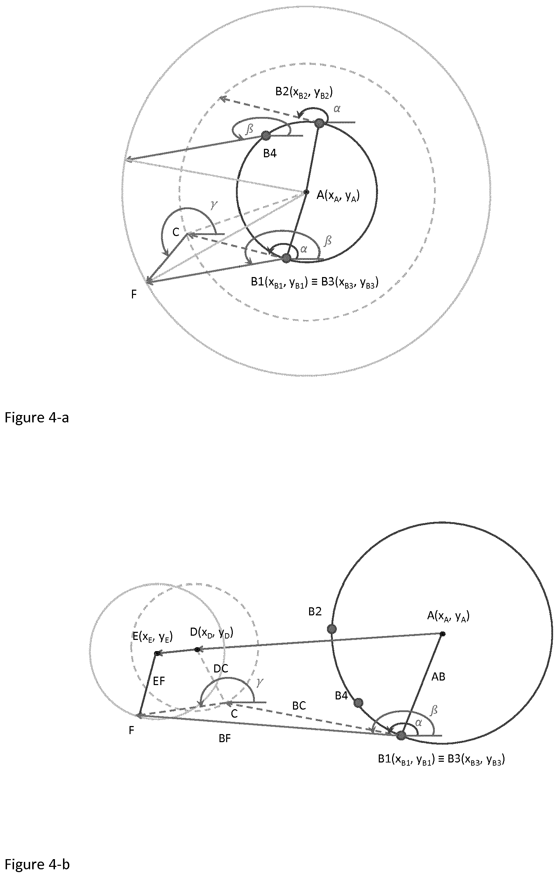

Figure 4-a and 4-b present another embodiment of the method object of the present subject matter

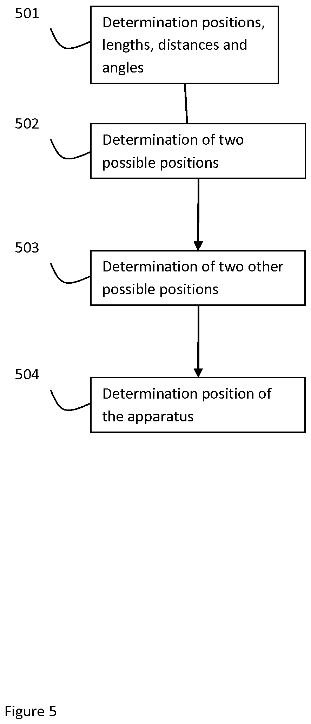

Figure 5 presents a first embodiment of the system object of the present subject matter

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

The embodiment of the present subject matter can be used in different use cases. One of the use cases is location-based services for example for device tracking and security, monitoring, payment, advertising, retails; note that the market of location-based services is growing very fast during the last few years.

One other use case is the navigation and guidance in large buildings, for example within complex shopping mall, museum, hospital, train station, airport. The subject matter of the different embodiments allows them to do indoor navigation.

On other use case is the information harvesting and network optimization, for example for network self-organization, self-optimization, mobility management, auto-configuration.

This use case arises within Internet of Things or IoT and smart environments (home/office/cities). This can for example be used for device to device communications, automatic queuing and ticket office, smart devices can exchange information.

This use case can also be integrated into SDN (Software Defined Network) and virtualization principles, in the control and networking of users. Indeed connected devices are experiencing huge growth in the number and inter-networking. Location information can benefit in several aspects: the control and management of network, security, and resource management (e.g. provisioning, load balancing, optimal routing). Examples in wireless system: the network can adapt to the user density by activating/de-activating access points or base stations and can invoke handover assisted by location information.

In different embodiments of the present subject matter different solutions can be used for example ultra sound, WiFi fingerprints, cellular like ToA (Time of Arrival) or iBeacon enabled by low energy Bluetooth.

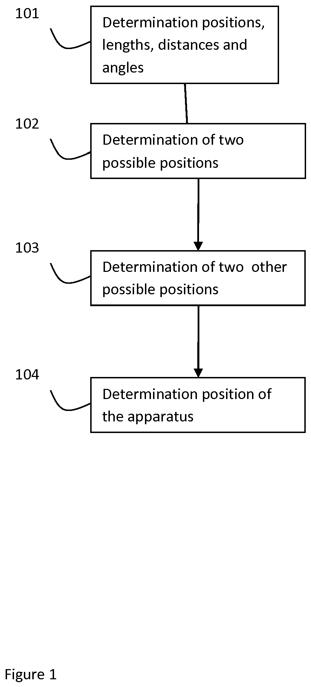

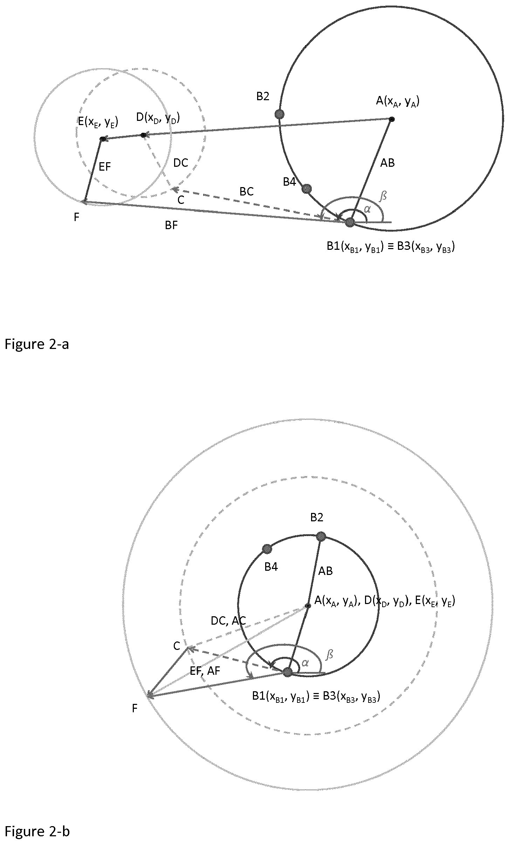

One embodiment of the present subject matter, illustrated figure 1, proposes a method to determine the localization of an apparatus. The figure 2-a presents the different positions, lengths, distances and angles used within this method when the beacon is moving. The figure 2-b presents the different positions, lengths, distances and angles used within this method when the beacon is static. This method comprises:

a first step 101 of determining;
a first distance $AB$ between the apparatus and a beacon, at a first instant and a first position A($x_A$, $y_A$) of the beacon, at the first instant and
a second distance $DC$ or $AC$ between the apparatus and the beacon, at a second instant and
a first length $BC$ of a first straight line going from a position of the apparatus at the first instant and a position of the apparatus at the second instant and
a first angle $\alpha$ between a first axis and the first straight line and
a third distance $EF$ or $AF$ between the apparatus and the beacon at a third instant and
a second length $BF$ of a second straight line going from a position of the apparatus at the first instant and a position of the apparatus at the third instant and
a second angle $\beta$ between the first axis and the second straight line and,
eventually a second position D($x_D$, $y_D$) of the beacon at the second instant and,
eventually a third position E($x_E$, $y_E$) of the beacon at the third instant,
the method also comprising a second step 102 of determining at least two possible positions $B1$, $B2$ of the apparatus based on;
the first distance $AB$ and
the second distance $DC$ or $AC$ and
the first length $BC$ and
the first angle $\alpha$ and
the first position A($x_A$, $y_A$) and
eventually the second position D($x_D$, $y_D$) and
and a third step of determining 103 at least two other possible positions $B3$, $B4$ of the apparatus based on;
the first distance $AB$ and
the third distance $EF$ or $AF$ and
the second length $BF$ and
the second angle $\beta$ and
the first position A($x_A$, $y_A$) and
eventually the third position E($x_E$, $y_E$),
and a fourth step 104 of determining 104 the position of the apparatus by calculating distances between couples of different possible positions $B1$, $B2$, $B3$, $B4$ and by determining the position based on the couple with minimal distance.

The apparatus is capable of measuring the distance between itself and the beacon (i.e., the distances AB and DC are deterministic). For example, this can be done by measuring the received signal strength or using some standard techniques. The apparatus is capable of measuring the distance and the direction (angle) of its motion so that the first length $BC$ and the angle $\alpha$ are deterministic; this can be done by gyroscope of accelerometer or a combination of these two elements or other standard techniques. So the user equipment can determine a length of a straight line going from a position of the apparatus at a first instant and a position of the apparatus at a second instant, even without knowing the absolute positions of the apparatus at the first and second instants

The figure 3-a presents another embodiment of the present subject matter. In this embodiment the second determination step 102 is configured, to determine two different first vectors V1, V2 of length the first length *BC* and with an angle, with the first axis, equal to the first angle $\alpha$,
the said first vectors start from one of the points of a first circle of center the first position of the beacon and with radius the first distance *AB,*
the said first vectors end in one of the points of a second circle of center the second position of the beacon and with radius the second distance *DC,*
the two possible positions *B*1, *B*2 being the starting points of the first vectors *V1, V2.*

The figure 3-b presents another embodiment of the present subject matter. In this embodiment the third determination step 103 is configured, to determine two different second vectors V3, V4 of length the second length *BF* and with an angle, with the first axis, equal to the second angle $\beta$,
the said second vectors start from one of the points of a first circle of center the first position of the beacon and with radius the first distance *AB,*
the said second vectors end in one of the points of a third circle of center the third position of the beacon and with radius the third distance *EF,*
the two possible positions *B*3, *B*4 being the starting points of the second vectors V3, V4.

The figure 3-c and 3-d present the two previous embodiments when the beacon is static.

In an embodiment of the subject matter the second determination step 102 is also configured;
to determine a first projection (*a*) of the first straight line along the first axis and
to determine a second projection (b) of the first straight line along a second axis orthogonal to the first axis and
to determine

$$c = x_A BC \cos\alpha + y_A BC \sin\alpha - \left(AB^2 + BC^2 - AC^2\right)\big/_2$$

wherein $x_A$ is the first position of the beacon along the first axis and $y_A$ is the first position of the beacon along the second axis and
*AB* is the first distance and
*AC* is the second distance and
*BC* the first length and
$\alpha$ is the first angle and
if the second projection is null the second determination step 102 is also configured;
to determine the position of the apparatus along the first axis ($x_B$) by dividing c by the first projection and
to determine the position along the second axis by using the following formulas;

$$y_{B1} = y_A + \sqrt{AB^2 - (x_B - x_A)^2}$$

$$y_{B2} = y_A - \sqrt{AB^2 - (x_B - x_A)^2}$$

wherein $x_B$ is the position of the apparatus along the first axis, $y_{B1}$ and $y_{B2}$ are two possible options for the position of apparatus along the second axis, $x_A$ is the first position of the beacon along the first axis and $y_A$ is the first position of the beacon along the second axis.

In an embodiment of the present subject matter the third determination step 103 is also configured;
to determine a first projection (*a*) of the second straight line along the first axis and
to determine a second projection (b) of the second straight line along a second axis orthogonal to the first axis and
to determine

$$c = x_A BF \cos\beta + y_A BF \sin\beta - \left(AB^2 + BF^2 - AF^2\right)\big/_2$$

wherein $x_A$ is the first position of the beacon along the first axis and $y_A$ is the first position of the beacon along the second axis and

*AB* is the first distance and
*AF* is the third distance and
*BF* is the second length and
$\beta$ is the second angle and
if the second projection is null the third determination step 103 is also configured;
to determine the position of the apparatus along the first axis ($x_B$) by dividing c by the first projection and
to determine the position along the second axis by using the following formulas;

$$y_{B1} = y_A + \sqrt{AB^2 - (x_B - x_A)^2}$$

$$y_{B2} = y_A - \sqrt{AB^2 - (x_B - x_A)^2}$$

wherein $x_B$ is the position of the apparatus along the first axis, $y_{B1}$ and $y_{B2}$ are two possible options for the position of apparatus along the second axis, $x_A$ is the first position of the beacon along the first axis and $y_A$ is the first position of the beacon along the second axis.

In an embodiment of the present subject matter the second determination 102 step is configured;
to determine a first projection (*a*) of the first straight line along the first axis and
to determine a second projection (b) of the first straight line along a second axis orthogonal to the first axis and
to determine

$$c = x_A BC \cos \alpha + y_A BC \sin \alpha - \left(AB^2 + BC^2 - AC^2\right)/_2$$

wherein $x_A$ is the first position of the beacon along the first axis and $y_A$ is the first position of the beacon along the second axis and
*AB* is the first distance and
*AC* is the second distance and
*BC* the first length and
$\alpha$ is the first angle and
if the second projection is not null the second determination step 102 is also configured;
to determine the position of the apparatus along the first and the second axis by using the following formulas;

$$d = - {^a}/_b$$

$$e = {^c}/_b$$

$$\Delta = \left(x_A - d(e - y_A)\right)^2 - (1 + d^2)(x_A^2 + (e - y_A)^2 - AB^2)$$

$$x_{B1} = \left(x_A - d(e - y_A) + \sqrt{\Delta}\right)\Big/(1 + d^2)$$

$$y_{B1} = d x_{B1} + e$$

$$x_{B2} = \left(x_A - d(e - y_A) - \sqrt{\Delta}\right)\Big/(1 + d^2)$$

$$y_{B2} = dx_{B2} + e$$

wherein $x_{B1}$ and $x_{B2}$ are two possible options of the positions of the apparatus along the first axis, $y_{B1}$ and $y_{B2}$ are two possible option of the position of apparatus along the second axis, $x_A$ is the first position of the beacon along the first axis and $y_A$ is the first position of the beacon along the second axis.

In an embodiment of the present subject matter the third determination 103 step is configured;
to determine a first projection ($a$) of the second straight line along the first axis and
to determine a second projection ($b$) of the second straight line along a second axis orthogonal to the first axis and
to determine

$$c = x_A BF \cos \beta + y_A BF \sin \beta - {(AB^2 + BF^2 - AF^2)}/{2}$$

wherein $x_A$ is the first position of the beacon along the first axis and $y_A$ is the first position of the beacon along the second axis and
$AB$ is the first distance and
$AF$ is the third distance and
$BF$ is the second length and
$\beta$ is the second angle and
if the second projection is not null the third determination step 103 is also configured;
to determine the position of the apparatus along the first and the second axis by using the following formulas;

$$d = -{a}/{b}$$

$$e = {c}/{b}$$

$$\Delta = \left(x_A - d(e - y_A)\right)^2 - (1 + d^2)(x_A^2 + (e - y_A)^2 - AB^2)$$

$$x_{B1} = {\left(x_A - d(e - y_A) + \sqrt{\Delta}\right)}/{(1 + d^2)}$$

$$y_{B1} = dx_{B1} + e$$

$$x_{B2} = {\left(x_A - d(e - y_A) - \sqrt{\Delta}\right)}/{(1 + d^2)}$$

$$y_{B2} = dx_{B2} + e$$

wherein $x_{B1}$ and $x_{B2}$ are two possible options of the positions of the apparatus along the first axis, $y_{B1}$ and $y_{B2}$ are two possible option of the position of apparatus along the second axis, $x_A$ is the first position of the beacon along the first axis and $y_A$ is the first position of the beacon along the second axis.

In an embodiment the first projection is determined using the following formula;

$$a = BC \cos \alpha$$

wherein $a$ is the first projection, $BC$ is the first length and $\alpha$ is the first angle.

In an embodiment the second projection is determined using the following formula;

$$b = BC \sin \alpha$$

wherein b is the second projection, $BC$ is the first length and $\alpha$ is the first angle.

In an embodiment of the present subject matter the second determination step 102 is also configured;
to determine a first projection $a$, along the first axis, the difference between the first straight line of the apparatus and a movement of the beacon between the first and second instant,
to determine a second projection b, along a second axis orthogonal to the first axis, of the difference between the first straight line and a movement of the beacon between the first and second instant, and
to determine

$$c = x_D BC \cos \alpha + y_D BC \sin \alpha - \left( AB^2 + BC^2 - DC^2 - (x_A^2 + y_A^2) + (x_D^2 + y_D^2) \right) \Big/ 2$$

wherein $x_A$ and $y_A$ are the first position of the beacon and
$x_D$ and $y_D$ are the second position of the beacon and
$x_E$ and $y_E$ are the third position of the beacon and
$AB$ is the first distance and
$DC$ is the second distance and
$BC$ the first length and
$\alpha$ is the first angle and
if the second projection is null the second determination step is also configured;
to determine the position of the apparatus along the first axis by dividing c by the first projection
to determine the position along the second axis by using the following formulas;

$$y_{B1} = y_A + \sqrt{AB^2 - (x_B - x_A)^2}$$

$$y_{B2} = y_A - \sqrt{AB^2 - (x_B - x_A)^2}$$

wherein $x_B$ is the position of the apparatus along the first axis, $y_{B1}$ and $y_{B2}$ are two possible option for the position of apparatus along the second axis.

In an embodiment of the present subject matter the third determination step 103 is also configured;
to determine a first projection $a$, along the first axis, of the difference between the second straight line and a movement of the beacon between the first and third instant,
to determine a second projection b, along a second axis orthogonal to the first axis, of the difference between the second straight line and a movement of the beacon between the first and third instant, and
to determine

$$c = x_E BF \cos \beta + y_E BF \sin \beta - \left( AB^2 + BF^2 - EF^2 - (x_A^2 + y_A^2) + (x_E^2 + y_E^2) \right) \Big/ 2$$

wherein $x_A$ and $y_A$ are the first position of the beacon and
$x_D$ and $y_D$ are the second position of the beacon and
$x_E$ and $y_E$ are the third position of the beacon and
$AB$ is the first distance and
$EF$ is the third distance and
$BF$ is the second length and
$\beta$ is the second angle and
if the second projection is null the third determination step 103 is also configured;

to determine the position of the apparatus along the first axis by dividing c by the first projection
to determine the position along the second axis by using the following formulas;

$$y_{B1} = y_A + \sqrt{AB^2 - (x_B - x_A)^2}$$

$$y_{B2} = y_A - \sqrt{AB^2 - (x_B - x_A)^2}$$

wherein $x_B$ is the position of the apparatus along the first axis, $y_{B1}$ and $y_{B2}$ are two possible option for the position of apparatus along the second axis.

In an embodiment of the present subject matter the second determination step 102 is also configured;
to determine a first projection $a$, along the first axis, the difference between the first straight line and a movement of the beacon between the first and second instant,
to determine a second projection b, along a second axis orthogonal to the first axis, of the difference between the first straight line and a movement of the beacon between the first and second instant, and
to determine

$$c = x_D BC \cos \alpha + y_D BC \sin \alpha - \left( AB^2 + BC^2 - DC^2 - (x_A^2 + y_A^2) + (x_D^2 + y_D^2) \right)\Big/2$$

wherein $x_A$ and $y_A$ are the first position of the beacon and
$x_D$ and $y_D$ are the second position of the beacon and
$AB$ is the first distance and
$DC$ is the second distance and
$BC$ the first length and
$\alpha$ is the first angle and
if the second projection is not null the second determination step 102 is also configured;
to determine the position of the apparatus along the first and the second axis by using the following formulas;

$$d = -\,{}^a\!/_b$$

$$e = {}^c\!/_b$$

$$\Delta = \left( x_A - d(e - y_A) \right)^2 - (1 + d^2)(x_A^2 + (e - y_A)^2 - AB^2)$$

$$x_{B1} = \left( x_A - d(e - y_A) + \sqrt{\Delta} \right)\Big/(1 + d^2)$$

$$y_{B1} = d x_{B1} + e$$

$$x_{B2} = \left( x_A - d(e - y_A) - \sqrt{\Delta} \right)\Big/(1 + d^2)$$

$$y_{B2} = d x_{B2} + e$$

wherein $x_{B1}$ and $x_{B2}$ are possible options of the positions of the apparatus along the first axis, $y_{B1}$ and $y_{B2}$ are two possible option of the position of apparatus along the second axis.

In an embodiment of the present subject matter the third determination step 103 is also configured;
to determine a first projection *a*, along the first axis, of the difference between the second straight line and a movement of the beacon between the first and third instant,
to determine a second projection b, along a second axis orthogonal to the first axis, of the difference between the second straight line and a movement of the beacon between the first and third instant, and
to determine

$$c = x_E BF \cos \beta + y_E BF \sin \beta - \left(AB^2 + BF^2 - EF^2 - (x_A^2 + y_A^2) + (x_E^2 + y_E^2)\right)\Big/2$$

wherein $x_A$ and $y_A$ are the first position of the beacon and
$x_E$ and $y_E$ are the third position of the beacon and
$AB$ is the first distance and
$EF$ is the third distance and
$BF$ is the second length and
$\beta$ is the second angle and
if the second projection is not null the third determination step 103 is also configured;
to determine the position of the apparatus along the first and the second axis by using the following formulas;

$$d = -\,a\big/b$$

$$e = c\big/b$$

$$\Delta = \left(x_A - d(e - y_A)\right)^2 - (1 + d^2)(x_A^2 + (e - y_A)^2 - AB^2)$$

$$x_{B1} = \left(x_A - d(e - y_A) + \sqrt{\Delta}\right)\Big/(1 + d^2)$$

$$y_{B1} = dx_{B1} + e$$

$$x_{B2} = \left(x_A - d(e - y_A) - \sqrt{\Delta}\right)\Big/(1 + d^2)$$

$$y_{B2} = dx_{B2} + e$$

wherein $x_{B1}$ and $x_{B2}$ are possible options of the positions of the apparatus along the first axis, $y_{B1}$ and $y_{B2}$ are two possible option of the position of apparatus along the second axis.

In an embodiment of the present subject matter the first projection is determined using the following formula;

$$a = BC \cos \alpha - x_D + x_A$$

wherein *a* is the first projection, *BC* is the first length and $\alpha$ is the first angle, $x_A$ is the first position of the beacon along the first axis, $x_D$ are the second position of the beacon along the first axis.

In an embodiment of the present subject matter the second projection is determined using the following formula;

$$b = BC \sin \alpha - y_D + y_A$$

wherein b is the second projection, $BC$ is the first length and $\alpha$ is the first angle, $y_A$ is the first position of the beacon along the second axis, $y_D$ is the second position of the beacon along the second axis.

In an embodiment of the present subject matter, the fourth determination step 104 is also configured to determine an Euclidean distance between each couple of possible positions and to choose the couple of possible positions with the minimum Euclidean distance and to determine the position of the apparatus as a mean value of the positions of the chosen couple.

In an embodiment of the present subject matter, the first determination step 101 is also configured to determine the second length (BF) and the second angle (β) based on;

a third length $CF$ of a third straight line going from a position of the apparatus at the second instant and a position of the apparatus at the third instant, and

a third angle $\gamma$ between a first axis and the third straight line and

the first length $BC$ and

the first angle $\alpha$.

These different elements are presented within the figure 4-in static beacon case and in figure 4-b in dynamic beacon case.

In an embodiment of the present subject matter, the first determination step 101 is configured to use the following formulas;

$$X = BC \cos\alpha + CF \cos\gamma$$

$$Y = BC \sin\alpha + CF \sin\gamma$$

$$BF = \sqrt{X^2 + Y^2}$$

$$\cos\beta = {}^X\!/\!_{BF}$$

$$\sin\beta = {}^Y\!/\!_{BF}$$

wherein $\alpha$ is the first angle, $\beta$ the second angle, $\gamma$ is the third angle, $BC$ the first length, $BF$ the second length, $CF$ the third length.

The method object of the present subject matter uses Radio Frequency elements in order to determine the distance between the beacon and the apparatus. This method allows an accurate localization of the apparatus under only one mobile or static beacon. This requirement of infrastructure of this method is low, no database or no server is required. This method is generic and can be applied to new use cases (the reference is mobile), the principle can also be used by today's systems (e.g. the above) to reduce their system complexity (cost) or to reduce the error. The method is easy to implement to today's smart devices (e.g. smart phones), low computational complexity. The method is not limited by the number of apparatus in use (scalable). Finally the apparatus or network/beacon can determine the location of the apparatus by simple information exchange; the method has low network resource energy consumption.

In other words the method of the present subject matter uses two principal ideas. The first idea is that by using the motion of the apparatus, we can determine its position through one and only one beacon, instead of many (for example. at least 3 in GPS-like solution). We allow the minimal number of required reference device. The cost of a reference system (e.g. using WiFi access points, RF base stations, Bluetooth beaconing devices) increases proportional to the density of the reference devices. The second idea is that by using the geometry through the method object of this divulgation, we can determine the position of the device even when the reference is a moving object (surely includes the special case when the reference is static or almost static that is today's common assumption).

In a nutshell in order to determine the position of the apparatus the method object of the present subject matter needs the following hypothesis:

The beacon is also mobile (it is not static)

The apparatus (its position is to be found) can find the distance between itself and the beacon by using some standard techniques (we will consider the measurement of such distance may have error)

The apparatus can determine the distance and the direction (angle) of its motion when the apparatus is in a displacement (movement) through embedded sensors (e.g. accelerometer, gyroscope), so the user equipment can determine a length of a straight line going from a position of the apparatus at a first instant and a position of the apparatus at a second instant, even without knowing the absolute positions of the apparatus at the first and second instants.

Using the notations of the figure 2, the method of the present subject matter uses the fact that the beacon is initially located at A($x_A$, $y_A$) which is known. The apparatus is initially at position B, which is unknown (to be determined), denoted by coordinates ($x_B$, $y_B$). C and D are the positions of the apparatus and beacon respectively, during their movement (they are not static). Assume that the beacon can localize itself, so that D($x_D$, $y_D$) is known. However, C(xc, yc) is not known. The apparatus is capable of measuring the distance between itself and the beacon (i.e., the distances AB and DC are deterministic). For example, this can be done by measuring the received signal strength or using some standard techniques. The apparatus is capable of measuring the distance and the direction (angle) of its motion so that BC and the angle $\alpha$ (with respect to the x-axis, for example by using gyroscope) are deterministic.

In an embodiment of the present subject matter we can do multi-sampling when continuously tracking the apparatus movement. In this embodiment, in which the first length *BC* is considered as a series of small steps. Similarly, this can be applied to the third length *CF* as well. We can combine the results to improve the positioning accuracy. This embodiment allows the reduction of the impact of noise.

The man, having ordinary skills in the art, can easily derive from this divulgation a generalization of the present subject matter in order to obtain three dimensional coordinates.

In an embodiment of the present subject matter the method is applied from one pair of apparatus to another pair (say multi-hop). In other words, a second apparatus will determine its position by the beaconing of a first apparatus and then a third apparatus will determine its position by the beaconing of this second apparatus. This can be done in a sequential manner (from "hop" to "hop").

An embodiment of the present subject matter the method is implemented within a system comprising one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

An embodiment of the present subject matter is a system to determine the position of an apparatus. This system is presented figure 4. The system comprises:

a first module 501 configured to determine;
a first distance *AB* between the apparatus and a beacon, at a first instant and
a first position A($x_A$, $y_A$) of the beacon, at the first instant and
a second distance *DC* or *AC* between the apparatus and the beacon, at a second instant and
a first length *BC* of a first straight line going from a position of the apparatus at the first instant and a position of the apparatus at the second instant and
a first angle $\alpha$ between a first axis and a first direction of the first straight line and
a third distance *EF* or *AF* between the apparatus and the beacon at a third instant and
a second length *BF* of a second straight line going from a position of the apparatus at the first instant and a position of the apparatus at the third instant and
a second angle $\beta$ between the first axis and a second direction of the second straight line and,
eventually a second position D($x_D$, $y_D$) of the beacon at the second instant and,
eventually a third position E($x_E$, $y_E$) of the beacon at the third instant,
the system comprising a second module 502 configured to determine at least two possible positions *B*1, *B*2 of the apparatus based on the first distance *AB* and the second distance *DC* and the first length *BC* and the first angle $\alpha$ and the first position A($x_A$, $y_A$) and eventually the second position D($x_D$, $y_D$)
the system comprising a third module 503 configured to determine at least two other possible positions (*B*3, *B*4) of the apparatus based on the first distance *AB* and the third distance *EF* and the second length *BF* and the second angle $\beta$ and the first position A($x_A$, $y_A$) and eventually the third position E($x_E$, $y_E$),
finally the system comprising a fourth module 504 configured to determine the position of the apparatus by calculating distances between the different possible positions (*B*1, *B*2, *B*3, *B*4) and by determining the position based on the possible positions with minimal distance.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

The different modules can be placed, within the apparatus, within the beacon or within other element of the network. In some embodiments the modules can also be spread among different element of the system.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter is a computer program, configured to realize the method described figure 1. This method is dedicated for determining the localization of an apparatus. The method comprises:

a first step 101 of determining;
a first distance *AB* between the apparatus and a beacon, at a first instant and
a first position A($x_A$, $y_A$) of the beacon, at the first instant and
a second distance *DC* or *AC* between the apparatus and the beacon, at a second instant and
a first length *BC* of a first straight line going from a position of the apparatus at the first instant and a position of the apparatus at the second instant and
a first angle $\alpha$ between a first axis and a first direction of the first straight line and
a third distance *EF* or *AF* between the apparatus and the beacon at a third instant and
a second length *BF* of a second straight line going from a position of the apparatus at the first instant and a position of the apparatus at the third instant and
a second angle $\beta$ between the first axis and a second direction of the second straight line and,
eventually a second position D($x_D$, $y_D$) of the beacon at the second instant and,
eventually a third position E($x_E$, $y_E$) of the beacon at the third instant,
the method also comprising a second step 102 of determining at least two possible positions *B*1, *B*2 of the apparatus based on the first distance *AB* and the second distance *DC* and the first length *BC* and the first angle $\alpha$ and the first position A($x_A$, $y_A$) and eventually the second position D($x_D$, $y_D$)
and a third step of determining 103 at least two other possible positions *B*3, *B*4 of the apparatus based on the first distance *AB* and the third distance *EF* and the second length *BF* and the second angle $\beta$ and the first position A($x_A$, $y_A$) and eventually the third position E($x_E$, $y_E$),
and a fourth step of determining 104 the position of the apparatus by calculating distances between couples of different possible positions *B*1, *B*2, *B*3, *B*4 and by determining the position based on the couple with minimal distance.

**Claims**

1. Method to determine a position of an apparatus comprising:

a first step (101) of determining;
a first distance *(AB)* between the apparatus and a beacon, at a first instant and
a first position (A($x_A$, $y_A$)) of the beacon, at the first instant and
a second distance *(DC or AC)* between the apparatus and the beacon, at a second instant and
a first length *(BC)* of a first straight line going from a position of the apparatus at the first instant and a position of the apparatus at the second instant and

a first angle ($\alpha$) between a first axis and a first direction of the first straight line and
a third distance *(EF* or *AF)* between the apparatus and the beacon at a third instant and
a second length *(BF)* of a second straight line going from a position of the apparatus at the first instant and a position of the apparatus at the third instant and
a second angle ($\beta$) between the first axis and a second direction of the second straight line and,
eventually a second position ($D(x_D, y_D)$) of the beacon at the second instant and, eventually a third position ($E(x_E, y_E)$) of the beacon at the third instant,
the method also comprising a second step (102) of determining at least two possible positions (*B*1, *B*2) of the apparatus based on;
the first distance (*AB*) and
the second distance (*DC* or *AC*) and
the first length (*BC*) and
the first angle ($\alpha$) and
the first position ($A(x_A, y_A)$) and
eventually the second position ($D(x_D, y_D)$)
and a third step (103) of determining at least two other possible positions (*B*3, *B*4) of the apparatus based on;
the first distance *(AB)* and
the third distance *(EF* or *AF)* and
the second length (*BF*) and
the second angle ($\beta$) and
the first position ($A(x_A, y_A)$) and
eventually the third position ($E(x_E, y_E)$),
and a fourth step (104) of determining the position of the apparatus by calculating distances between couples of different possible positions (*B*1, *B*2, *B*3, *B*4) and by determining the position based on the couple with minimal distance.

2. Method according to claim 1 wherein;
the second determination step (102) is configured, to determine two different first vectors (*V*1, V2) of length the first length *(BC)* and with an angle, with the first axis, equal to the first angle ($\alpha$),
the said first vectors start from one of the points of a first circle of center the first position of the beacon and with radius the first distance *(AB),*
the said first vectors end in one of the points of a second circle of center the second position of the beacon and with radius the second distance (*DC*),
the two possible positions (*B*1, *B*2) being the starting points of the first vectors (*V*1, *V*2),
and/or wherein the third determination step (103) is configured, to determine two different second vectors (V3, V4) of length the second length *(BF)* and with an angle, with the first axis, equal to the second angle ($\beta$),
the said second vectors start from one of the points of the first circle of center the first position of the beacon and with radius the first distance (*AB*),
the said second vectors end in one of the points of a third circle of center the third position of the beacon and with radius the third distance (EF),
the two other possible positions (*B*3, *B*4) being the starting points of the second vectors (V3, V4).

3. Method according to claim 1 wherein the second (102) and/or third (103) determination step are/is also configured;
to determine a first projection (*a*) of respectively the first straight line or the second straight line along the first axis and
to determine a second projection (*b*) of respectively the first straight line or the second straight line along a second axis orthogonal to the first axis and
to determine respectively

$$c = x_A BC \cos\alpha + y_A BC \sin\alpha - \left(AB^2 + BC^2 - AC^2\right)\big/2$$

or

$$c = x_A BF \cos\beta + y_A BF \sin\beta - \left(AB^2 + BF^2 - AF^2\right)\big/2$$

wherein $x_A$ is the first position of the beacon along the first axis and $y_A$ is the first position of the beacon along the second axis and
$AB$ is the first distance and
$AC$ is the second distance and
$BC$ the first length and
$AF$ is the third distance and
$BF$ is the second length and
$\alpha$ is the first angle and
$\beta$ is the second angle and
if the second projection is null the second (102) and/or third (103) determination step are/is also configured;
to determine the position of the apparatus along the first axis ($x_B$) by dividing c by the first projection and
to determine the position of the apparatus along the second axis by using the following formulas;

$$y_{B1} = y_A + \sqrt{AB^2 - (x_B - x_A)^2}$$

$$y_{B2} = y_A - \sqrt{AB^2 - (x_B - x_A)^2}$$

wherein $x_B$ is the position of the apparatus along the first axis, $y_{B1}$ and $y_{B2}$ are two possible options for the position of apparatus along the second axis, $x_A$ is the first position of the beacon along the first axis and $y_A$ is the first position of the beacon along the second axis.

4. Method according to claim 1 or 3 wherein the second (102) and/or third (103) determination step are/is configured;
to determine a first projection ($a$) of respectively the first straight line or the second straight line along the first axis and
to determine a second projection ($b$) of respectively the first straight line or the second straight line along a second axis orthogonal to the first axis and
to determine respectively

$$c = x_A BC \cos \alpha + y_A BC \sin \alpha - \frac{(AB^2 + BC^2 - AC^2)}{2}$$

or

$$c = x_A BF \cos \beta + y_A BF \sin \beta - \frac{(AB^2 + BF^2 - AF^2)}{2}$$

wherein $x_A$ is the first position of the beacon along the first axis and $y_A$ is the first position of the beacon along the second axis and
$AB$ is the first distance and
$AC$ is the second distance and
$BC$ the first length and
$AF$ is the third distance and
$BF$ is the second length and
$\alpha$ is the first angle and
$\beta$ is the second angle and
if the second projection is not null the second (102) and/or third (103) determination step are/is also configured;
to determine the position of the apparatus along the first and the second axis by using the following formulas;

$$d = -\frac{a}{b}$$

$$e = \frac{c}{b}$$

$$\Delta = \left(x_A - d(e - y_A)\right)^2 - (1 + d^2)(x_A^2 + (e - y_A)^2 - AB^2)$$

$$x_{B1} = \frac{\left(x_A - d(e - y_A) + \sqrt{\Delta}\right)}{(1 + d^2)}$$

$$y_{B1} = dx_{B1} + e$$

$$x_{B2} = \frac{\left(x_A - d(e - y_A) - \sqrt{\Delta}\right)}{(1 + d^2)}$$

$$y_{B2} = dx_{B2} + e$$

wherein $x_{B1}$ and $x_{B2}$ are two possible options of the positions of the apparatus along the first axis, $y_{B1}$ and $y_{B2}$ are two possible option of the position of apparatus along the second axis, $x_A$ is the first position of the beacon along the first axis and $y_A$ is the first position of the beacon along the second axis.

5. Method according to claim 3 or 4 wherein the first projection is determined using the following formula;

$$a = BC \cos \alpha$$

and/or

$$a = BF \cos \beta$$

wherein $a$ is the first projection, $BC$ is the first length and $\alpha$ is the first angle, $BF$ the second length and $\beta$ the second angle.

6. Method according to claim 3 or 4 or 5 wherein the second projection is determined using the following formula;

$$b = BC \sin \alpha$$

and/or

$$b = BF \sin \beta$$

wherein b is the second projection, $BC$ is the first length and $\alpha$ is the first angle, $BF$ the second length and $\beta$ the second angle.

7. Method according to claim 1 wherein the second (102) and/or third (103) determination step are/is also configured; to determine a first projection (a), along the first axis, of respectively the difference between the first straight line and a movement of the beacon between the first and second instant or the difference between the second straight line and a movement of the beacon between the first and third instant, to determine a second projection (b), along a second axis orthogonal to the first axis, of respectively the difference between the first straight line and a movement of the beacon between the first and second instant or the difference between the second straight line and a movement of the beacon between the first and third instant, and to determine respectively

$$c = x_D BC \cos \alpha + y_D BC \sin \alpha - \left(AB^2 + BC^2 - DC^2 - (x_A^2 + y_A^2) + (x_D^2 + y_D^2)\right)\Big/ 2$$

Or

$$c = x_E BF \cos \beta + y_E BF \sin \beta - \left(AB^2 + BF^2 - EF^2 - (x_A^2 + y_A^2) + (x_E^2 + y_E^2)\right)\Big/ 2$$

wherein $x_A$ and $y_A$ are the first position of the beacon and
$x_D$ and $y_D$ are the second position of the beacon and
$x_E$ and $y_E$ are the third position of the beacon and
$AB$ is the first distance and
$DC$ is the second distance and
$BC$ the first length and
$EF$ is the third distance and
$BF$ is the second length and
$\alpha$ is the first angle and
$\beta$ is the second angle and
if the second projection is null the second (102) and/or third (103) determination step are/is also configured;
to determine the position of the apparatus along the first axis by dividing c by the first projection
to determine the position of the apparatus along the second axis by using the following formulas;

$$y_{B1} = y_A + \sqrt{AB^2 - (x_B - x_A)^2}$$

$$y_{B2} = y_A - \sqrt{AB^2 - (x_B - x_A)^2}$$

wherein $x_B$ is the position of the apparatus along the first axis, $y_{B1}$ and $y_{B2}$ are two possible option for the position of apparatus along the second axis.

8. Method according to claim 1 or 7 wherein the second (102) and/or third (103) determination step are/is also configured;
to determine a first projection (*a*), along the first axis, of respectively the difference between the first straight line and a movement of the beacon between the first and second instant or the difference between the second straight line and a movement of the beacon between the first and third instant,
to determine a second projection (b), along a second axis orthogonal to the first axis, of respectively the difference between the first straight line and a movement of the beacon between the first and second instant or the difference between the second straight line and a movement of the beacon between the first and third instant, and
to determine respectively

$$c = x_D BC \cos \alpha + y_D BC \sin \alpha - \left(AB^2 + BC^2 - DC^2 - (x_A^2 + y_A^2) + (x_D^2 + y_D^2)\right)\Big/ 2$$

Or

$$c = x_E BF \cos \beta + y_E BF \sin \beta - \left(AB^2 + BF^2 - EF^2 - (x_A^2 + y_A^2) + (x_E^2 + y_E^2)\right)\Big/ 2$$

wherein $x_A$ and $y_A$ are the first position of the beacon and
$x_D$ and $y_D$ are the second position of the beacon and
$x_E$ and $y_E$ are the third position of the beacon and
$AB$ is the first distance and
$DC$ is the second distance and

*BC* the first length and
*EF* is the third distance and
*BF* is the second length and
$\alpha$ is the first angle and
$\beta$ is the second angle and
if the second projection is not null the second (102) and/or third (103) determination step are/is also configured;
to determine the position of the apparatus along the first and the second axis by using the following formulas;

$$d = -\,{}^{a}\!/_{b}$$

$$e = {}^{c}\!/_{b}$$

$$\Delta = \left(x_A - d(e - y_A)\right)^2 - (1 + d^2)(x_A^2 + (e - y_A)^2 - AB^2)$$

$$x_{B1} = {}^{\left(x_A - d(e - y_A) + \sqrt{\Delta}\right)}\!/_{(1 + d^2)}$$

$$y_{B1} = dx_{B1} + e$$

$$x_{B2} = {}^{\left(x_A - d(e - y_A) - \sqrt{\Delta}\right)}\!/_{(1 + d^2)}$$

$$y_{B2} = dx_{B2} + e$$

wherein $x_{B1}$ and $x_{B2}$ are possible options of the positions of the apparatus along the first axis, $y_{B1}$ and $y_{B2}$ are two possible option of the position of apparatus along the second axis.

9.  Method according to claim 7 or 8 wherein the first projection is determined using the following formula;

$$a = BC \cos \alpha - x_D + x_A$$

and/or

$$a = BF \cos \beta - x_E + x_A$$

wherein $a$ is the first projection, $BC$ is the first length, $BF$ is the second length, $\alpha$ is the first angle, $\beta$ is the second angle, $x_A$ is the first position of the beacon along the first axis, $x_D$ is the second position of the beacon along the first axis, $x_E$ is the third position of the beacon along the first axis.

10. Method according to claim 7 or 8 or 9 wherein the second projection is determined using the following formula;

$$b = BC \sin \alpha - y_D + y_A$$

and/or

$$b = BF \sin \beta - y_E + y_A$$

wherein b is the second projection, *BC* is the first length, *BF* is the second length, $\alpha$ is the first angle, $\beta$ is the second angle, $y_A$ is the first position of the beacon along the second axis, $y_D$ is the second position of the beacon along the second axis, $y_E$ is the third position of the beacon along the second axis

**11.** Method according to any of the previous claims wherein
the fourth determination step (104) is also configured;
to choose the couple of possible positions with the minimum Euclidean distance and;
to determine the position of the apparatus as a mean value of the positions of the couple.

**12.** Method according to any of the previous claims wherein the first determination step (101) is also configured to determine the second length (*BF*) and the second angle ($\beta$) based on;
a third length (CF) of a third straight line going from a position of the apparatus at the second instant and a position of the apparatus at the third instant and
a third angle ($\gamma$) between a first axis and a third direction of the third straight line and
the first length (*BC*) and
the first angle ($\alpha$).

**13.** Method accord to the claim 12 wherein;
the first determination step (101) is configured to use the following formulas;

$$X = BC \cos \alpha + CF \cos \gamma$$

$$Y = BC \sin \alpha + CF \sin \gamma$$

$$BF = \sqrt{X^2 + Y^2}$$

$$\cos \beta = {}^X\!/_{BF}$$

$$\sin \beta = {}^Y\!/_{BF}$$

wherein $\alpha$ is the first angle, $\beta$ the second angle, $\gamma$ is the third angle, *BC* the first length, *CF* the second length, *BF* the second length.

**14.** System to determine the position of an apparatus and comprising:

a first module (501) configured to determine;
a first distance (*AB*) between the apparatus and a beacon, at a first instant and
a first position (A($x_A$, $y_A$)) of the beacon, at the first instant and
a second distance (*DC* or *AC*) between the apparatus and the beacon, at a second instant and
a first length (*BC*) of a first straight line going from a position of the apparatus at the first instant and a position of the apparatus at the second instant and
a first angle ($\alpha$) between a first axis and a first direction of the first straight line and
a third distance (*EF* or *AF*) between the apparatus and the beacon at a third instant and
a second length (*BF*) of a second straight line going from a position of the apparatus at the first instant and a position of the apparatus at the third instant and
a second angle ($\beta$) between the first axis and a second direction of the second straight line and,
eventually a second position (D($x_D$, $y_D$)) of the beacon at the second instant and, eventually a third position (E($x_E$, $y_E$)) of the beacon at the third instant,
a second module (502) configured to determine at least two possible positions (*B1*, *B2*) of the apparatus based on;
the first distance (*AB*) and
the second distance (*DC* or *AC*) and
the first length (*BC*) and

the first angle ($\alpha$) and
the first position (A($x_A$, $y_A$)) and
eventually the second position (D($x_D$, $y_D$))
a third module (503) configured to determine at least two other possible positions *(B3, B4)* of the apparatus based on;
the first distance (*AB*) and
the third distance *(EF* or *AF)* and
the second length (*BF*) and
the second angle (*β*) and
the first position (A($x_A$, $y_A$)) and
eventually the third position (E($x_E$, $y_E$)),
and a fourth module (504) configured to calculate distances between couples of different possible positions (*B*1, *B*2, *B*3, *B*4) and to determine the position based on the couple with minimal distance.

**15.** A computer-readable medium having embodied thereon a method for determining the position of an apparatus, the method comprising:

a first step (101) of determining;
a first distance *(AB)* between the apparatus and a beacon, at a first instant and
a first position (A($x_A$, $y_A$)) of the beacon, at the first instant and
a second distance (*DC* or *AC*) between the apparatus and the beacon, at a second instant and
a first length (*BC*) of a first straight line going from a position of the apparatus at the first instant and a position of the apparatus at the second instant and
a first angle ($\alpha$) between a first axis and a first direction of the first straight line and
a third distance (*EF* or *AF*) between the apparatus and the beacon at a third instant and
a second length (*BF*) of a second straight line going from a position of the apparatus at the first instant and a position of the apparatus at the third instant and
a second angle (*β*) between the first axis and a second direction of the second straight line and,
eventually a second position (D($x_D$, $y_D$)) of the beacon at the second instant and, eventually a third position (E($x_E$, $y_E$)) of the beacon at the third instant,
the method also comprising a second step (102) of determining at least two possible positions (*B*1, *B*2) of the apparatus based on;
the first distance (*AB*) and
the second distance (*DC* or *AC*) and
the first length (*BC*) and
the first angle ($\alpha$) and
the first position (A($x_A$, $y_A$)) and
eventually the second position (D($x_D$, $y_D$))
the method also comprising a third step (103) of determining at least two other possible positions (*B*3, *B*4) of the apparatus based on;
the first distance (*AB*) and
the third distance (*EF* or *AF*) and
the second length (*BF*) and
the second angle (*β*) and
the first position (A($x_A$, $y_A$)) and
eventually the third position (E($x_E$, $y_E$)),
the method also comprising a fourth step (104) of determining the position of the apparatus by calculating distances between couples of different possible positions (*B*1, *B*2, *B*3, *B*4) and by determining the position based on the couple with minimal distance.

**Patentansprüche**

**1.** Verfahren zum Bestimmen einer Position einer Vorrichtung, umfassend:

einen ersten Schritt (101) des Bestimmens;
eines ersten Abstands (*AB*) zwischen der Vorrichtung und einem Beacon zu einem ersten Zeitpunkt und
einer ersten Position (A($x_A$, $y_A$)) des Beacon zum ersten Zeitpunkt und

eines zweiten Abstands (*DC* oder *AC*) zwischen der Vorrichtung und dem Beacon zu einem zweiten Zeitpunkt und

einer ersten Länge (*BC*) einer ersten Geraden, die von einer Position der Vorrichtung zum ersten Zeitpunkt und einer Position der Vorrichtung zum zweiten Zeitpunkt ausgeht, und

eines ersten Winkels ($\alpha$) zwischen einer ersten Achse und einer ersten Richtung der ersten Geraden und eines zweiten Abstands (*EF* oder *AF*) zwischen der Vorrichtung und dem Beacon zu einem dritten Zeitpunkt und einer zweiten Länge (*BF*) einer zweiten Geraden, die von einer Position der Vorrichtung zum ersten Zeitpunkt und einer Position der Vorrichtung zum dritten Zeitpunkt ausgeht, und

eines zweiten Winkels ($\beta$) zwischen der ersten Achse und einer zweiten Richtung der zweiten Geraden und eventuell einer zweiten Position (D($x_D$, $y_D$)) des Beacon zum zweiten Zeitpunkt und eventuell einer dritten Position (E($x_E$, $y_E$)) des Beacon zu einem dritten Zeitpunkt,

wobei das Verfahren außerdem einen zweiten Schritt (102) des Bestimmens von mindestens zwei möglichen Positionen (*B*1, *B*2) der Vorrichtung umfasst, beruhend auf:

dem ersten Abstand (*AB*) und
dem zweiten Abstand (*DC* oder *AC*) und
der ersten Länge (*BC*) und
dem ersten Winkel ($\alpha$) und
der ersten Position (A($x_A$, $y_A$)) und
eventuell der zweiten Position (D($x_D$, $y_D$))

und einen dritten Schritt (103) des Bestimmens von mindestens zwei anderen möglichen Positionen (*B*3, *B*4) der Vorrichtung, beruhend auf;
dem ersten Abstand (*AB*) und
dem dritten Abstand (*EF* oder *AF*) und
der zweiten Länge (*BF*) und
dem zweiten Winkel ($\beta$) und
der ersten Position (A($x_A$, $y_A$)) und
eventuell der dritten Position (E($x_E$, $y_E$)),
und einen vierten Schritt (104) des Bestimmens der Position der Vorrichtung durch Berechnen der Abstände zwischen Paaren von verschiedenen möglichen Positionen *(B1, B*2, *B*3, *B*4) und durch Bestimmen der Position beruhend auf dem Paar mit dem geringsten Abstand.

**2.** Verfahren nach Anspruch 1, wobei;
der zweite Bestimmungsschritt (102) konfiguriert ist zum Bestimmen von zwei verschiedenen ersten Vektoren (*V*1, *V*2) der Länge der ersten Länge *(BC)* und mit einem Winkel mit der ersten Achse gleich dem ersten Winkel (a),
wobei besagte erste Vektoren von einem der Punkte eines ersten Kreises des Zentrums der ersten Position des Beacon und mit einem Radius des ersten Abstands *(AB)* beginnen,
wobei besagte erste Vektoren in einem der Punkte eines zweiten Kreises des Zentrums der zweiten Position des Beacon und mit einem Radius des zweiten Abstands (*DC*) enden,
wobei die zwei möglichen Positionen (*B*1, *B*2) die Anfangspunkte der ersten Vektoren (*V*1, *V*2) sind,
und/oder wobei der dritte Bestimmungsschritt (103) konfiguriert ist zum Bestimmen von zwei verschiedenen zweiten Vektoren (*V*3, *V*4) der Länge der zweiten Länge (*BF*) und mit einem Winkel mit der ersten Achse gleich dem zweiten Winkel ($\beta$),
wobei besagte zweite Vektoren von einem der Punkte des ersten Kreises des Zentrums der ersten Position des Beacon und mit einem Radius des ersten Abstands (*AB*) beginnen,
wobei besagte zweite Vektoren in einem der Punkte eines dritten Kreises des Zentrums der dritten Position des Beacon und mit einem Radius des dritten Abstands (*EF*) enden, wobei die zwei anderen möglichen Positionen *(B3, B*4) die Anfangspunkte der zweiten Vektoren (*V*3, *V*4) sind.

**3.** Verfahren nach Anspruch 1, wobei der zweite (102) und/oder dritte (103) Bestimmungsschritt außerdem konfiguriert ist/sind;
zum Bestimmen einer ersten Projektion (a) der jeweiligen ersten Geraden oder der zweiten Geraden entlang der ersten Achse und
zum Bestimmen einer zweiten Projektion (b) der jeweiligen ersten Geraden oder der zweiten Geraden entlang einer zweiten Achse, die orthogonal zur ersten Achse verläuft, und
zum jeweiligen Bestimmen von

$$c = x_A BC \cos \alpha + y_A BC \sin \alpha - \frac{(AB^2 + BC^2 - AC^2)}{2}$$

oder

$$c = x_A BF \cos \beta + y_A BF \sin \beta - \frac{(AB^2 + BF^2 - AF^2)}{2}$$

wobei $x_A$ die erste Position des Beacon entlang der ersten Achse ist und $y_A$ die erste Position des Beacon entlang der zweiten Achse und

*AB* der erste Abstand ist und

*AC* der zweite Abstand ist und

*BC* die erste Länge und

*AF* der dritte Abstand ist und

*BF* die zweite Länge und

$\alpha$ der erste Winkel ist und

$\beta$ der zweite Winkel und

wenn die zweite Projektion null ist, der zweite (102) und/oder dritte (103) Bestimmungsschritt außerdem konfiguriert ist/sind;

zum Bestimmen der Position der Vorrichtung entlang der ersten Achse ($x_B$) durch Division von c durch die erste Projektion und

zum Bestimmen der Position der Vorrichtung entlang der zweiten Achse unter Verwendung der folgenden Formeln;

$$y_{B1} = y_A + \sqrt{AB^2 - (x_B - x_A)^2}$$

$$y_{B2} = y_A - \sqrt{AB^2 - (x_B - x_A)^2}$$

wobei $x_B$ die Position der Vorrichtung entlang der ersten Achse ist, $y_{B1}$ und $y_{B2}$ die zwei möglichen Optionen für die Position der Vorrichtung entlang der zweiten Achse sind und $x_A$ die erste Position des Beacon entlang der ersten Achse und $y_A$ die erste Position des Beacon entlang der zweiten Achse ist.

4. Verfahren nach Anspruch 1 oder 3, wobei der zweite (102) und/oder dritte (103) Bestimmungsschritt konfiguriert ist/sind;

zum Bestimmen einer ersten Projektion (a) der jeweiligen ersten Geraden oder der zweiten Geraden entlang der ersten Achse und

zum Bestimmen einer zweiten Projektion (b) der jeweiligen ersten Geraden oder der zweiten Geradem entlang einer zweiten Achse orthogonal zur ersten Achse und

zum jeweiligen Bestimmen von

$$c = x_A BC \cos \alpha + y_A BC \sin \alpha - \frac{(AB^2 + BC^2 - AC^2)}{2}$$

oder

$$c = x_A BF \cos \beta + y_A BF \sin \beta - \frac{(AB^2 + BF^2 - AF^2)}{2}$$

wobei $x_A$ die erste Position des Beacon entlang der ersten Achse ist und $y_A$ die erste Position des Beacon entlang der zweiten Achse und

*AB* der erste Abstand ist und

*AC* der zweite Abstand ist und
*BC* die erste Länge und
*AF* der dritte Abstand ist und
*BF* die zweite Länge und
$\alpha$ der erste Winkel ist und
$\beta$ der zweite Winkel und
wenn die zweite Projektion nicht null ist, der zweite (102) und/oder dritte (103) Bestimmungsschritt außerdem konfiguriert ist/sind;
zum Bestimmen der Position der Vorrichtung entlang der ersten und der zweiten Achse unter Verwendung der folgenden Formeln;

$$d = -\,{}^a\!/_b$$

$$e = {}^c\!/_b$$

$$\Delta = \left(x_A - d(e - y_A)\right)^2 - (1 + d^2)(x_A^2 + (e - y_A)^2 - AB^2)$$

$$x_{B1} = \left.\left(x_A - d(e - y_A) + \sqrt{\Delta}\right)\middle/(1 + d^2)\right.$$

$$y_{B1} = dx_{B1} + e$$

$$x_{B2} = \left.\left(x_A - d(e - y_A) - \sqrt{\Delta}\right)\middle/(1 + d^2)\right.$$

$$y_{B2} = dx_{B2} + e$$

wobei $x_{B1}$ und $x_{B2}$ die zwei möglichen Optionen der Positionen der Vorrichtung entlang der ersten Achse sind, $y_{B1}$ und $y_{B2}$ die zwei möglichen Optionen der Position der Vorrichtung entlang der zweiten Achse sind und $x_A$ die erste Position des Beacon entlang der ersten Achse und $y_A$ die erste Position des Beacon entlang der zweiten Achse ist.

5. Verfahren nach Anspruch 3 oder 4, wobei die erste Projektion bestimmt wird unter Verwendung der folgenden Formel;

$$a = BC \cos \alpha$$

und/oder

$$a = BF \cos \beta$$

wobei $\alpha$ die erste Projektion ist, *BC* die erste Länge ist und $\alpha$ der erste Winkel ist und *BF* die zweite Länge und $\beta$ der zweite Winkel ist.

6. Verfahren nach Anspruch 3 oder 4 oder 5, wobei die zweite Projektion bestimmt wird unter Verwendung der folgenden Formel;

$$b = BC \sin \alpha$$

und/oder

$$b = BF \sin \beta$$

wobei b zweite Projektion ist, $BC$ die erste Länge ist und $\alpha$ der erste Winkel ist und $BF$ die zweite Länge und $\beta$ der zweite Winkel ist.

7. Verfahren nach Anspruch 1, wobei der zweite (102) und/oder dritte (103) Bestimmungsschritt außerdem konfiguriert ist/sind;
zum Bestimmen einer ersten Projektion (a) entlang der ersten Achse von der jeweiligen Differenz zwischen der ersten Geraden und einer Bewegung des Beacon zwischen dem ersten und zweiten Zeitpunkt oder der Differenz zwischen der zweiten Geraden und einer Bewegung des Beacon zwischen dem ersten und dritten Zeitpunkt,
zum Bestimmen einer zweiten Projektion (b) entlang einer zweiten Achse orthogonal zur ersten Achse von der jeweiligen Differenz zwischen der ersten Geraden und einer Bewegung des Beacon zwischen dem ersten und zweiten Zeitpunkt oder der Differenz zwischen der zweiten Geraden und einer Bewegung des Beacon zwischen dem ersten und dritten Zeitpunkt, und
zum jeweiligen Bestimmen von

$$c = x_D BC \cos \alpha + y_D BC \sin \alpha - \left( AB^2 + BC^2 - DC^2 - (x_A^2 + y_A^2) + (x_D^2 + y_D^2) \right) \Big/ 2$$

oder

$$c = x_E BF \cos \beta + y_E BF \sin \beta - \left( AB^2 + BF^2 - EF^2 - (x_A^2 + y_A^2) + (x_E^2 + y_E^2) \right) \Big/ 2$$

wobei $x_A$ und $y_A$ die erste Position des Beacon sind und
$x_D$ und $y_D$ die zweite Position des Beacon sind und
$x_E$ und $y_E$ die dritte Position des Beacon sind und
$AB$ der erste Abstand ist und
$DC$ der zweite Abstand ist und
$BC$ die erste Länge und
$EF$ der dritte Abstand ist und
$BF$ die zweite Länge und
$\alpha$ der erste Winkel ist und
$\beta$ der zweite Winkel und
wenn die zweite Projektion null ist, der zweite (102) und/oder dritte (103) Bestimmungsschritt außerdem konfiguriert ist/sind;
zum Bestimmen der Position der Vorrichtung entlang der ersten Achse durch Division von c durch die erste Projektion
zum Bestimmen der Position der Vorrichtung entlang der zweiten Achse unter Verwendung der folgenden Formeln;

$$y_{B1} = y_A + \sqrt{AB^2 - (x_B - x_A)^2}$$

$$y_{B2} = y_A - \sqrt{AB^2 - (x_B - x_A)^2}$$

wobei $x_B$ die Position der Vorrichtung entlang der ersten Achse ist und $y_{B1}$ und $y_B 2$ die zwei möglichen Optionen für die Position der Vorrichtung entlang der zweiten Achse sind.

8. Verfahren nach Anspruch 1 oder 7, wobei der zweite (102) und/oder dritte (103) Bestimmungsschritt außerdem konfiguriert ist/sind;

   zum Bestimmen einer ersten Projektion (a) entlang der ersten Achse von der jeweiligen Differenz zwischen der ersten Geraden und einer Bewegung des Beacon zwischen dem ersten und zweiten Zeitpunkt oder der Differenz zwischen der zweiten Geraden und einer Bewegung des Beacon zwischen dem ersten und dritten Zeitpunkt,

   zum Bestimmen einer zweiten Projektion (b) entlang einer zweiten Achse orthogonal zur ersten Achse von der jeweiligen Differenz zwischen der ersten Geraden und einer Bewegung des Beacon zwischen dem ersten und zweiten Zeitpunkt oder der Differenz zwischen der zweiten Geraden und einer Bewegung des Beacon zwischen dem ersten und dritten Zeitpunkt, und

   zum jeweiligen Bestimmen von

$$c = x_D BC \cos\alpha + y_D BC \sin\alpha - \left(AB^2 + BC^2 - DC^2 - (x_A^2 + y_A^2) + (x_D^2 + y_D^2)\right)\Big/2$$

oder

$$c = x_E BF \cos\beta + y_E BF \sin\beta - \left(AB^2 + BF^2 - EF^2 - (x_A^2 + y_A^2) + (x_E^2 + y_E^2)\right)\Big/2$$

   wobei $x_A$ und $y_A$ die erste Position des Beacon sind und
   $x_D$ und $y_D$ die zweite Position des Beacon sind und
   $x_E$ und $y_E$ die dritte Position des Beacon sind und
   $AB$ der erste Abstand ist und
   $DC$ der zweite Abstand ist und
   $BC$ die erste Länge und
   $EF$ der dritte Abstand ist und
   $BF$ die zweite Länge und
   $\alpha$ der erste Winkel ist und
   $\beta$ der zweite Winkel und
   wenn die zweite Projektion nicht null ist, der zweite (102) und/oder dritte (103) Bestimmungsschritt außerdem konfiguriert ist/sind;
   zum Bestimmen der Position der Vorrichtung entlang der ersten und der zweiten Achse unter Verwendung der folgenden Formeln;

$$d = -\,{}^a\!/b$$

$$e = {}^c\!/b$$

$$\Delta = \left(x_A - d(e - y_A)\right)^2 - (1 + d^2)(x_A^2 + (e - y_A)^2 - AB^2)$$

$$x_{B1} = \left(x_A - d(e - y_A) + \sqrt{\Delta}\right)\Big/(1 + d^2)$$

$$y_{B1} = dx_{B1} + e$$

$$x_{B2} = \left(x_A - d(e - y_A) - \sqrt{\Delta}\right)\Big/(1 + d^2)$$

$$y_{B2} = dx_{B2} + e$$

wobei $x_{B1}$ und $x_{B2}$ die möglichen Optionen der Positionen der Vorrichtung entlang der ersten Achse sind und $y_{B1}$ und $y_{B2}$ die zwei möglichen Optionen der Position der Vorrichtung entlang der zweiten Achse sind.

9. Verfahren nach Anspruch 7 oder 8, wobei die erste Projektion bestimmt wird unter Verwendung der folgenden Formel;

$$a = BC \cos \alpha - x_D + x_A$$

und/oder

$$a = BF \cos \beta - x_E + x_A$$

wobei $\alpha$ die erste Projektion ist, BC die erste Länge ist, *BF* die zweite Länge ist, $\alpha$ der erste Winkel ist, $\beta$ der zweite Winkel ist, $x_A$ die erste Position des Beacon entlang der ersten Achse ist, $x_D$ zweite Position des Beacon entlang der ersten Achse ist und $x_E$ die dritte Position des Beacon entlang der ersten Achse ist.

10. Verfahren nach Anspruch 7 oder 8 oder 9, wobei die zweite Projektion bestimmt wird unter Verwendung der folgenden Formel;

$$b = BC \sin \alpha - y_D + y_A$$

und/oder

$$b = BF \sin \beta - y_E + y_A$$

wobei b zweite Projektion ist, *BC* die erste Länge ist, *BF* die zweite Länge ist, $\alpha$ der erste Winkel ist, $\beta$ der zweite Winkel ist, $y_A$ die erste Position des Beacon entlang der zweiten Achse ist, $y_D$ zweite Position des Beacon entlang der zweiten Achse ist und $y_E$ die dritte Position des Beacon entlang der zweiten Achse ist.

11. Verfahren nach einem beliebigen der vorstehenden Ansprüche, wobei der vierte Bestimmungsschritt (104) außerdem konfiguriert ist;
zum Auswählen des Paares möglicher Positionen mit dem geringsten euklidischen Abstand und;
zum Bestimmen der Position der Vorrichtung als einen Mittelwert der Positionen des Paares.

12. Verfahren nach einem beliebigen der vorstehenden Ansprüche, wobei der erste Bestimmungsschritt (101) außerdem konfiguriert ist zum Bestimmen der zweiten Länge *(BF)* und des zweiten Winkels ($\beta$), beruhend auf;
einer dritten Länge (CF) einer dritten Geraden, die von einer Position der Vorrichtung zum zweiten Zeitpunkt und einer Position der Vorrichtung zum dritten Zeitpunkt ausgeht, und
eines dritten Winkels ($\gamma$) zwischen einer ersten Achse und einer dritten Richtung der dritten Geraden und
der ersten Länge *(BC)* und
dem ersten Winkel ($\alpha$).

13. Verfahren nach Anspruch 12, wobei;
der erste Bestimmungsschritt (101) konfiguriert ist zur Verwendung der folgenden Formeln;

$$X = BC \cos \alpha + CF \cos \gamma$$

$$Y = BC \sin \alpha + CF \sin \gamma$$

$$BF = \sqrt{X^2 + Y^2}$$

$$\cos\beta = {X}\big/{BF}$$

$$\sin\beta = {Y}\big/{BF}$$

wobei $\alpha$ der erste Winkel ist, $\beta$ der zweite Winkel ist, $\gamma$ der dritte Winkel ist, *BC* die erste Länge, CFdie zweite Länge und *BF* die zweite Länge ist.

14. System zum Bestimmen der Position einer Vorrichtung und umfassend:

ein erstes Modul (501), konfiguriert zum Bestimmen;
eines ersten Abstands (*AB*) zwischen der Vorrichtung und einem Beacon zu einem ersten Zeitpunkt und
einer ersten Position (A($x_A$, $y_A$)) des Beacon zum ersten Zeitpunkt und
eines zweiten Abstands (*DC* oder *AC*) zwischen der Vorrichtung und dem Beacon zu einem zweiten Zeitpunkt und
einer ersten Länge (*BC*) einer ersten Geraden, die von einer Position der Vorrichtung zum ersten Zeitpunkt und einer Position der Vorrichtung zum zweiten Zeitpunkt ausgeht, und
eines ersten Winkels ($\alpha$) zwischen einer ersten Achse und einer ersten Richtung der ersten Geraden und
eines dritten Abstands (*EF* oder AF) zwischen der Vorrichtung und dem Beacon zu einem dritten Zeitpunkt und
einer zweiten Länge (*BF*) einer zweiten Geraden, die von einer Position der Vorrichtung zum ersten Zeitpunkt und einer Position der Vorrichtung zum dritten Zeitpunkt ausgeht, und
eines zweiten Winkels ($\beta$) zwischen der ersten Achse und einer zweiten Richtung der zweiten Geraden und
eventuell einer zweiten Position (D($x_D$, $y_D$)) des Beacon zum zweiten Zeitpunkt und eventuell einer dritten Position (E($x_E$, $y_E$)) des Beacon zu einem dritten Zeitpunkt,
ein zweites Modul (502), konfiguriert zum Bestimmen von mindestens zwei möglichen Positionen (*B*1, *B*2) der Vorrichtung, beruhend auf:

dem ersten Abstand (*AB*) und
dem zweiten Abstand (*DC* oder *AC*) und
der ersten Länge (*BC*) und
dem ersten Winkel ($\alpha$) und
der ersten Position (A($x_A$, $y_A$)) und
eventuell der zweiten Position (D($x_D$, $y_D$)),

ein drittes Modul (503), konfiguriert zum Bestimmen von mindestens zwei anderen möglichen Positionen (*B3, B4*) der Vorrichtung, beruhend auf:

dem ersten Abstand (*AB*) und
dem dritten Abstand (*EF* oder *AF*) und
der zweiten Länge (*BF*) und
dem zweiten Winkel ($\beta$) und
der ersten Position (A($x_A$, $y_A$)) und
eventuell der dritten Position (E($x_E$, $y_E$)),

und ein viertes Modul (504), konfiguriert zum Berechnen der Abstände zwischen Paaren von verschiedenen möglichen Positionen (*B*1, *B*2, *B*3, *B*4) und zum Bestimmen der Position beruhend auf dem Paar mit dem geringsten Abstand.

15. Computerlesbares Medium, auf dem ein Verfahren zum Bestimmen der Position einer Vorrichtung ausgeführt ist, wobei das Verfahren umfasst:

einen ersten Schritt (101) des Bestimmens;
eines ersten Abstands *(AB)* zwischen der Vorrichtung und einem Beacon zu einem ersten Zeitpunkt und

einer ersten Position (A($x_A$, $y_A$)) des Beacon zum ersten Zeitpunkt und

eines zweiten Abstands (*DC* oder *AC*) zwischen der Vorrichtung und dem Beacon zu einem zweiten Zeitpunkt und

einer ersten Länge (*BC*) einer ersten Geraden, die von einer Position der Vorrichtung zum ersten Zeitpunkt und einer Position der Vorrichtung zum zweiten Zeitpunkt ausgeht, und

eines ersten Winkels ($\alpha$) zwischen einer ersten Achse und einer ersten Richtung der ersten Geraden und

eines zweiten Abstands (*EF* oder *AF*) zwischen der Vorrichtung und dem Beacon zu einem dritten Zeitpunkt und

einer zweiten Länge (*BF*) einer zweiten Geraden, die von einer Position der Vorrichtung zum ersten Zeitpunkt und einer Position der Vorrichtung zum dritten Zeitpunkt ausgeht, und

eines zweiten Winkels ($\beta$) zwischen der ersten Achse und einer zweiten Richtung der zweiten Geraden und eventuell einer zweiten Position (D($x_D$, $y_D$)) des Beacon zum zweiten Zeitpunkt und eventuell einer dritten Position (E($x_E$, $y_E$)) des Beacon zu einem dritten Zeitpunkt,

wobei das Verfahren außerdem einen zweiten Schritt (102) des Bestimmens von mindestens zwei möglichen Positionen (B1, B2) der Vorrichtung umfasst, beruhend auf;

dem ersten Abstand (*AB*) und

dem zweiten Abstand (*DC* oder *AC*) und

der ersten Länge (*BC*) und

dem ersten Winkel ($\alpha$) und

der ersten Position (A($x_A$, $y_A$)) und

eventuell der zweiten Position (D($x_D$, $y_D$))

wobei das Verfahren außerdem einen dritten Schritt (103) des Bestimmens von mindestens zwei anderen möglichen Positionen *(B3, B4)* der Vorrichtung umfasst, beruhend auf;

dem ersten Abstand (*AB*) und

dem dritten Abstand (*EF* oder *AF*) und

der zweiten Länge (*BF*) und

dem zweiten Winkel ($\beta$) und

der ersten Position (A($x_A$, $y_A$)) und

eventuell der dritten Position (E($x_E$, $y_E$)),

wobei das Verfahren außerdem einem vierten Schritt (104) des Bestimmens der Position der Vorrichtung umfasst durch Berechnen der Abstände zwischen Paaren von verschiedenen möglichen Positionen (*B*1, *B*2, *B*3, *B*4) und durch Bestimmen der Position beruhend auf dem Paar mit dem geringsten Abstand.

## Revendications

1. Procédé de détermination d'une position d'un appareil comprenant :

   une première étape (101) pour déterminer ;
   une première distance *(AB)* entre l'appareil et une balise, à un premier instant et une première position (A($x_A$, $y_A$)) de la balise, au premier instant et
   une deuxième distance *(DC ou AC)* entre l'appareil et la balise, à un deuxième instant et
   une première longueur (*BC*) d'une première ligne droite allant d'une position de l'appareil au premier instant à une position de l'appareil au deuxième instant et
   un premier angle ($\alpha$) entre un premier axe et une première direction de la première ligne droite et
   une troisième distance (*EF* ou *AF*) entre l'appareil et la balise à un troisième instant et
   une deuxième longueur (*BF*) d'une deuxième ligne droite allant d'une position de l'appareil au premier instant à une position de l'appareil au troisième instant et
   un deuxième angle ($\beta$) entre le premier axe et une deuxième direction de la deuxième ligne droite et,
   finalement une deuxième position (D($x_D$, $y_D$)) de la balise au deuxième instant et, finalement une troisième position (E($x_E$, $y_E$)) de la balise au troisième instant,
   le procédé comprenant également une deuxième étape (102) de détermination d'au moins deux positions possibles (*B*1, *B*2) de l'appareil en fonction de ;
   la première distance (*AB*) et
   la deuxième distance (*DC* ou *AC*) et
   la première longueur (*BC*) et
   le premier angle ($\alpha$) et
   la première position (A($x_A$, $y_A$)) et
   finalement la deuxième position (D($x_D$, $y_D$))

et une troisième étape (103) de détermination d'au moins deux autres positions possibles (B3, B4) de l'appareil en fonction de ;
la première distance (AB) et
la troisième distance (EF ou AF) et
la deuxième longueur (BF) et
le deuxième angle ($\beta$) et
la première position (A($x_A$, $y_A$)) et
finalement la troisième position (E($x_E$, $y_E$)),
et une quatrième étape (104) de détermination de la position de l'appareil en calculant des distances entre des paires de positions possibles différentes (B1, B2, B3, B4) et en déterminant la position en fonction de la paire de distance minimale.

2. Procédé selon la revendication 1, dans lequel ;
la deuxième étape de détermination (102) est configurée, pour déterminer deux premiers vecteurs différents (V1, V2) d'une première longueur (BC) et formant un angle, avec le premier axe, égal au premier angle ($\alpha$),
lesdits premiers vecteurs partent d'un des points d'un premier cercle au centre de la première position de la balise et avec un rayon de la première distance (AB),
lesdits premiers vecteurs se terminent dans un des points d'un deuxième cercle au centre de la deuxième position de la balise et avec un rayon de la deuxième distance (DC),
les deux positions possibles (B1, B2) étant les points de départ des premiers vecteurs (V1, V2),
et/ou dans lequel la troisième étape de détermination (103) est configurée, pour déterminer deux deuxièmes vecteurs différents (V3, V4) d'une deuxième longueur (BF) et formant un angle, avec le premier axe, égal au deuxième angle ($\beta$),
lesdits deuxièmes vecteurs partent d'un des points du premier cercle au centre de la première position de la balise et avec un rayon de la première distance (AB),
lesdits deuxièmes vecteurs se terminent dans un des points d'un troisième cercle au centre de la troisième position de la balise et avec un rayon de la troisième distance (EF), les deux autres positions possibles (B3, B4) étant les points de départ des deuxièmes vecteurs (V3, V4).

3. Procédé selon la revendication 1 dans lequel la deuxième (102) et/ou la troisième (103) étape(s) de détermination est/sont également configurée(s) ;
pour déterminer une première projection (a) respectivement de la première ligne droite ou de la deuxième ligne droite le long du premier axe et
pour déterminer une deuxième projection (b) respectivement de la première ligne droite ou de la deuxième ligne droite le long d'un deuxième axe perpendiculaire au premier axe et
pour déterminer respectivement

$$c = x_A BC \cos\alpha + y_A BC \sin\alpha - {(AB^2 + BC^2 - AC^2)}/{2}$$

ou

$$c = x_A BF \cos\beta + y_A BF \sin\beta - {(AB^2 + BF^2 - AF^2)}/{2}$$

où $x_A$ est la première position de la balise le long du premier axe et $y_A$ est la première position de la balise le long du deuxième axe et
AB est la première distance et
AC est la deuxième distance et
BC est la première longueur et
AF est la troisième distance et
BF est la deuxième longueur et
$\alpha$ est le premier angle et
$\beta$ est le deuxième angle et
si la deuxième projection est nulle, la deuxième (102) et/ou la troisième (103) étape(s) de détermination est/sont également configurée(s) ;

pour déterminer la position de l'appareil le long du premier axe ($x_B$) en divisant c par la première projection et
pour déterminer la position de l'appareil le long du deuxième axe en utilisant les formules suivantes ;

$$y_{B1} = y_A + \sqrt{AB^2 - (x_B - x_A)^2}$$

$$y_{B2} = y_A - \sqrt{AB^2 - (x_B - x_A)^2}$$

où $x_B$ est la position de l'appareil le long du premier axe, $Y_{B1}$ et $Y_{B2}$ sont deux options possibles pour la position de l'appareil le long du deuxième axe, $x_A$ est la première position de la balise le long du premier axe et $y_A$ est la première position de la balise le long du deuxième axe.

4. Procédé selon la revendication 1 ou 3 dans lequel la deuxième (102) et/ou la troisième (103) étape(s) de détermination est/sont configurée(s) ;
pour déterminer une première projection (*a*) respectivement de la première ligne droite ou de la deuxième ligne droite le long du premier axe et
pour déterminer une deuxième projection (b) respectivement de la première ligne droite ou de la deuxième ligne droite le long d'un deuxième axe perpendiculaire au premier axe et
pour déterminer respectivement

$$c = x_A BC \cos \alpha + y_A BC \sin \alpha - {(AB^2 + BC^2 - AC^2)}/{2}$$

ou

$$c = x_A BF \cos \beta + y_A BF \sin \beta - {(AB^2 + BF^2 - AF^2)}/{2}$$

où $x_A$ est la première position de la balise le long du premier axe et $y_A$ est la première position de la balise le long du deuxième axe et
$AB$ est la première distance et
$AC$ est la deuxième distance et
$BC$ est la première longueur et
$AF$ est la troisième distance et
$BF$ est la deuxième longueur et
$\alpha$ est le premier angle et
$\beta$ est le deuxième angle et
si la deuxième projection n'est pas nulle, la deuxième (102) et/ou la troisième (103) étape(s) de détermination est/sont également configurée(s) ;
pour déterminer la position de l'appareil le long du premier et du deuxième axes en utilisant les formules suivantes ;

$$d = - {a}/{b}$$

$$e = {c}/{b}$$

$$\Delta = \left(x_A - d(e - y_A)\right)^2 - (1 + d^2)(x_A^2 + (e - y_A)^2 - AB^2)$$

$$x_{B1} = \left. \left(x_A - d(e - y_A) + \sqrt{\Delta}\right) \middle/ (1 + d^2) \right.$$

$$y_{B1} = dx_{B1} + e$$

$$x_{B2} = \left. \left(x_A - d(e - y_A) - \sqrt{\Delta}\right) \middle/ (1 + d^2) \right.$$

$$y_{B2} = dx_{B2} + e$$

où $x_{B1}$ et $x_{B2}$ sont deux options possibles des positions de l'appareil le long du premier axe, $y_{B1}$ et $y_{B2}$ sont deux options possibles de la position de l'appareil le long du deuxième axe, $x_A$ est la premier position de la balise le long du premier axe et $y_A$ est la première position de la balise le long du deuxième axe.

5. Procédé selon la revendication 3 ou 4 dans lequel la première projection est déterminée en utilisant la formule suivante ;

$$a = BC \cos \alpha$$

et/ou

$$a = BF \cos \beta$$

où a est la première projection, *BC* est la première longueur $\alpha$ est le premier angle, *BF* la deuxième longueur et $\beta$ le deuxième angle.

6. Procédé selon la revendication 3 ou 4 ou 5 dans lequel la deuxième projection est déterminée en utilisant la formule suivante ;

$$b = BC \sin \alpha$$

et/ou

$$b = BF \sin \beta$$

où b est la deuxième projection, *BC* est la première longueur et $\alpha$ est le premier angle, *BF* la deuxième longueur et $\beta$ le deuxième angle.

7. Procédé selon la revendication 1 dans lequel la deuxième (102) et/ou la troisième (103) étape(s) de détermination est/sont également configurée(s) ;
   pour déterminer une première projection (a), le long du premier axe, respectivement de la différence entre la première ligne droite et un mouvement de la balise entre le premier et le deuxième instants ou de la différence entre la deuxième ligne droite et un mouvement de la balise entre le premier et le troisième instants,
   pour déterminer une deuxième projection (b), le long d'un deuxième axe perpendiculaire au premier axe, respectivement de la différence entre la première ligne droite et un mouvement de la balise entre le premier et le deuxième instants ou de la différence entre la deuxième ligne droite et un mouvement de la balise entre le premier et le troisième instants, et
   pour déterminer respectivement

$$c = x_D BC \cos\alpha + y_D BC \sin\alpha - \left(AB^2 + BC^2 - DC^2 - (x_A^2 + y_A^2) + (x_D^2 + y_D^2)\right)\Big/2$$

Ou

$$c = x_E BF \cos\beta + y_E BF \sin\beta - \left(AB^2 + BF^2 - EF^2 - (x_A^2 + y_A^2) + (x_E^2 + y_E^2)\right)\Big/2$$

où $x_A$ et $y_A$ sont la première position de la balise et
$x_D$ et $y_D$ sont la deuxième position de la balise et
$x_E$ et $y_E$ sont la troisième position de la balise et
$AB$ est la première distance et
$DC$ est la deuxième distance et
$BC$ est la première longueur et
$EF$ est la troisième distance et
$BF$ est la deuxième longueur et
$\alpha$ est le premier angle et
$\beta$ est le deuxième angle et
si la deuxième projection est nulle, la deuxième (102) et/ou la troisième (103) étape(s) de détermination est/sont également configurée(s) ;
pour déterminer la position de l'appareil le long du premier axe en divisant $c$ par la première projection
pour déterminer la position de l'appareil le long du deuxième axe en utilisant les formules suivantes ;

$$y_{B1} = y_A + \sqrt{AB^2 - (x_B - x_A)^2}$$

$$y_{B2} = y_A - \sqrt{AB^2 - (x_B - x_A)^2}$$

où $x_B$ est la position de l'appareil le long du premier axe, $y_{B1}$ et $y_{B2}$ sont deux options possibles pour la position de l'appareil le long du deuxième axe.

8. Procédé selon la revendication 1 ou 7 dans lequel la deuxième (102) et/ou la troisième (103) étape(s) de détermination est/sont également configurée(s) ;
   pour déterminer une première projection (a), le long du premier axe, respectivement de la différence entre la première ligne droite et un mouvement de la balise entre le premier et le deuxième instants ou de la différence entre la deuxième ligne droite et un mouvement de la balise entre le premier et le troisième instants,
   pour déterminer une deuxième projection (b), le long d'un deuxième axe perpendiculaire au premier axe, respectivement de la différence entre la première ligne droite et un mouvement de la balise entre le premier et le deuxième instants ou de la différence entre la deuxième ligne droite et un mouvement de la balise entre le premier et le troisième instants, et
   pour déterminer respectivement

$$c = x_D BC \cos\alpha + y_D BC \sin\alpha - \left(AB^2 + BC^2 - DC^2 - (x_A^2 + y_A^2) + (x_D^2 + y_D^2)\right)\Big/2$$

Ou

$$c = x_E BF \cos\beta + y_E BF \sin\beta - \left(AB^2 + BF^2 - EF^2 - (x_A^2 + y_A^2) + (x_E^2 + y_E^2)\right)\Big/2$$

où $x_A$ et $y_A$ sont la première position de la balise et
$x_D$ et $y_D$ sont la deuxième position de la balise et

$x_E$ et $y_E$ sont la troisième position de la balise et
*AB* est la première distance et
*DC* est la deuxième distance et
*BC* est la première longueur et
*EF* est la troisième distance et
*BF* est la deuxième longueur et
$\alpha$ est le premier angle et
$\beta$ est le deuxième angle et
si la deuxième projection n'est pas nulle, la deuxième (102) et/ou la troisième (103) étape(s) de détermination est/sont également configurée(s) ;
pour déterminer la position de l'appareil le long du premier et du deuxième axes en utilisant les formules suivantes ;

$$d = -\,{}^{a}/_{b}$$

$$e = {}^{c}/_{b}$$

$$\Delta = \left(x_A - d(e - y_A)\right)^2 - (1 + d^2)(x_A^2 + (e - y_A)^2 - AB^2)$$

$$x_{B1} = \left(x_A - d(e - y_A) + \sqrt{\Delta}\right)\Big/(1 + d^2)$$

$$y_{B1} = dx_{B1} + e$$

$$x_{B2} = \left(x_A - d(e - y_A) - \sqrt{\Delta}\right)\Big/(1 + d^2)$$

$$y_{B2} = dx_{B2} + e$$

où $x_{B1}$ et $x_{B2}$ sont des options possibles des positions de l'appareil le long du premier axe, $y_{B1}$ et $y_{B2}$ sont deux options possibles de la position de l'appareil le long du deuxième axe;

**9.** Procédé selon la revendication 7 ou 8 dans lequel la première projection est déterminée en utilisant la formule suivante ;

$$a = BC \cos \alpha - x_D + x_A$$

et/ou

$$a = BF \cos \beta - x_E + x_A$$

où $a$ est la première projection, *BC* est la première longueur, *BF* est la deuxième longueur, $\alpha$ est le premier angle, $\beta$ est le deuxième angle, $x_A$ est la première position de la balise le long du premier axe, $x_D$ est la deuxième position de la balise le long du premier axe, $x_E$ est la troisième position de la balise le long du premier axe.

**10.** Procédé selon la revendication 7 ou 8 ou 9 dans lequel la deuxième projection est déterminée en utilisant la formule suivante ;

$$b = BC \sin \alpha - y_D + y_A$$

et/ou

$$b = BF \sin \beta - y_E + y_A$$

où $b$ est la deuxième projection, $BC$ est la première longueur, $BF$ est la deuxième longueur, $\alpha$ est le premier angle, $\beta$ est le deuxième angle, $y_A$ est la première position de la balise le long du deuxième axe, $y_D$ est la deuxième position de la balise le long du deuxième axe, $y_E$ est la troisième position de la balise le long du deuxième axe.

11. Procédé selon l'une quelconque des revendications précédentes dans lequel
la quatrième étape de détermination (104) est également configurée ;
pour choisir la paire de positions possibles avec la distance euclidienne minimale et ;
pour déterminer la position de l'appareil en tant que valeur moyenne des positions de la paire.

12. Procédé selon l'une quelconque des revendications précédentes dans lequel la première étape de détermination (101) est également configurée pour déterminer la deuxième longueur ($BF$) et le deuxième angle ($\beta$) en fonction ;
d'une troisième longueur ($CF$) d'une troisième ligne droite allant d'une position de l'appareil au deuxième instant à une position de l'appareil au troisième instant et
d'un troisième angle ($y$) entre un premier axe et une troisième direction de la troisième ligne droite et
de la première longueur ($BC$) et
du premier angle ($\alpha$).

13. Procédé selon la revendication 12, dans lequel ;
la première étape de détermination (101) est configurée pour utiliser les formules suivantes ;

$$X = BC \cos \alpha + CF \cos \gamma$$

$$Y = BC \sin \alpha + CF \sin \gamma$$

$$BF = \sqrt{X^2 + Y^2}$$

$$\cos \beta = {X}/{BF}$$

$$\sin \beta = {Y}/{BF}$$

où $\alpha$ est le premier angle, $\beta$ le deuxième angle, $y$ est le troisième angle, $BC$ la première longueur, $CF$ la deuxième longueur, $BF$ la deuxième longueur.

14. Système de détermination de la position d'un appareil et comprenant :

un premier module (501) configuré pour déterminer ;
une première distance ($AB$) entre l'appareil et une balise, à un premier instant et une première position ($A(x_A, y_A)$) de la balise, au premier instant et
une deuxième distance *(DC ou AC)* entre l'appareil et la balise, à un deuxième instant et
une première longueur ($BC$) d'une première ligne droite allant d'une position de l'appareil au premier instant à une position de l'appareil au deuxième instant et
un premier angle ($\alpha$) entre un premier axe et une première direction de la première ligne droite et
une troisième distance *(EF ou AF)* entre l'appareil et la balise à un troisième instant et
une deuxième longueur ($BF$) d'une deuxième ligne droite allant d'une position de l'appareil au premier instant à une position de l'appareil au troisième instant et

un deuxième angle ($\beta$) entre le premier axe et une deuxième direction de la deuxième ligne droite et, finalement une deuxième position (D($x_D$, $y_D$)) de la balise au deuxième instant et, finalement une troisième position (E($x_E$, $y_E$)) de la balise au troisième instant,

un deuxième module (502) configuré pour déterminer au moins deux positions possibles (*B1*, *B2*) de l'appareil en fonction de ;

la première distance (*AB*) et

la deuxième distance (*DC* ou *AC*) et

la première longueur (*BC*) et

le premier angle ($\alpha$) et

la première position (A($x_A$, $y_A$)) et

finalement la deuxième position (D($x_D$, $y_D$))

un troisième module (503) configuré pour déterminer au moins deux autres positions possibles (*B3*, *B4*) de l'appareil en fonction de ;

la première distance (*AB*) et

la troisième distance (*EF* ou *AF*) et

la deuxième longueur (BF) et

le deuxième angle ($\beta$) et

la première position (A($x_A$, $y_A$)) et

finalement la troisième position (E($x_E$, $y_E$)),

et un quatrième module (504) configuré pour calculer des distances entre des paires de positions possibles différentes (*B1*, *B2*, *B3*, *B4*) et pour déterminer la position en fonction de la paire de distance minimale.

**15.** Support lisible par ordinateur intégrant un procédé pour déterminer la position d'un appareil, le procédé comprenant :

une première étape (101) pour déterminer ;

une première distance (*AB*) entre l'appareil et une balise, à un premier instant et une première position (A($x_A$, $y_A$)) de la balise, au premier instant et

une deuxième distance (*DC* ou *AC*) entre l'appareil et la balise, à un deuxième instant et

une première longueur (*BC*) d'une première ligne droite allant d'une position de l'appareil au premier instant à une position de l'appareil au deuxième instant et

un premier angle ($\alpha$) entre un premier axe et une première direction de la première ligne droite et

une troisième distance (*EF* ou *AF*) entre l'appareil et la balise à un troisième instant et

une deuxième longueur (*BF*) d'une deuxième ligne droite allant d'une position de l'appareil au premier instant à une position de l'appareil au troisième instant et

un deuxième angle ($\beta$) entre le premier axe et une deuxième direction de la deuxième ligne droite et,

finalement une deuxième position (D($x_D$, $y_D$)) de la balise au deuxième instant et, finalement une troisième position (E($x_E$, $y_E$)) de la balise au troisième instant,

le procédé comprenant également une deuxième étape (102) de détermination d'au moins deux positions possibles (*B1*, *B2*) de l'appareil en fonction de ;

la première distance *(AB)* et

la deuxième distance (*DC* ou *AC*) et

la première longueur (*BC*) et

le premier angle ($\alpha$) et

la première position (A($x_A$, $y_A$)) et

finalement la deuxième position (D($x_D$, $y_D$))

le procédé comprenant également une troisième étape (103) de détermination d'au moins deux autres positions possibles (*B3*, *B4*) de l'appareil en fonction de ;

la première distance (*AB*) et

la troisième distance (*EF* ou *AF)* et

la deuxième longueur (BF) et

le deuxième angle ($\beta$) et

la première position (A($x_A$, $y_A$)) et

finalement la troisième position (E($x_E$, $y_E$)),

le procédé comprenant également une quatrième étape (104) de détermination de la position de l'appareil en calculant des distances entre des paires de positions possibles différentes (*B1*, *B2*, *B3*, *B4*) et en déterminant la position en fonction de la paire de distance minimale.

```
101 ──┐  ┌────────────────────────────┐
       │  │ Determination positions,   │
          │ lengths, distances and     │
          │ angles                     │
          └────────────────────────────┘
                          │
102 ──┐  ┌────────────────────────────┐
       │  │ Determination of two       │
          │ possible positions         │
          └────────────────────────────┘
                          │
                          ▼
103 ──┐  ┌────────────────────────────┐
       │  │ Determination of two  other │
          │ possible positions         │
          └────────────────────────────┘
                          │
                          ▼
104 ──┐  ┌────────────────────────────┐
       │  │ Determination position of  │
          │ the apparatus              │
          └────────────────────────────┘
```

Figure 1

Figure 2-a

Figure 2-b

Figure 3-a

Figure 3-b

Figure 3-c

Figure 3-d

Figure 4-a

Figure 4-b

501 — Determination positions, lengths, distances and angles

502 — Determination of two possible positions

503 — Determination of two other possible positions

504 — Determination position of the apparatus

Figure 5

**EP 3 096 154 B1**

**Patent documents cited in the description**

- US 20070075898 A1